# EUROPEAN PATENT APPLICATION

(11) **EP 4 311 071 A1**
(43) Date of publication of application: **24.01.2024**
(21) Application number: 23176580.1
(22) Date of filing: 01.06.2023
(51) Int. Cl.: H02J 7/00, H01M 10/42, H01M 10/44

(54) **POWER SUPPLY INCLUDING CONTROL OF A THERMAL MANAGEMENT SYSTEM**

(30) Priority: 01.06.2022 US 202263347884 P; 08.08.2022 US 202263370755 P
(71) Applicant: Milwaukee Electric Tool Corporation, Brookfield, WI 53005 (US)
(72) Inventor: TANG, Chun Jian, West Allis 53227 (US); BARROWCLIFT, Michael A., East Troy 53120 (US); HOCKERS, Brian M., Nashotah 53058 (US); TESCH, Benjamin C., Milwaukee 53222 (US)
(74) Representative: Forresters IP LLP

(57) **Abstract**

A portable power supply includes an internal power source, a thermal management system configured to control a temperature of one or more internal components of the portable power supply, a power input unit configured to charge the internal power source, a power output unit configured to provide power output by the internal power source, a first sensing circuit configured to detect the temperature of the one or more internal components, a secondary power source, and a controller. The controller is configured to receive a first signal from the first sensing circuit, enable the thermal management system based on the temperature of the one or more internal components, and enable charging of the internal power source based on the temperature of the one or more internal components.

## Description

### RELATED APPLICATION

This application claims the benefit of U.S. Provisional Patent Application No. 63/347,884, filed on Jun. 1, 2022, and U.S. Provisional Patent Application No. 63/370,755, filed Aug. 8, 2022, the entire content of each of which is hereby incorporated by reference.

### FIELD

Embodiments described herein relate to portable power supplies.

### SUMMARY

Portable power supplies disable discharge power to the user and/or charging functions when the power supply reaches predetermined operating conditions, such as, for example, end-of-discharge ("EOD") where a voltage of an onboard battery is too low to perform sufficiently (e.g., the battery has reached a low voltage discharge threshold), charge complete where a state of charge of an onboard battery reaches 100%, an overtemperature condition ("OT") where the onboard battery is too hot to supply discharge power, an under-temperature condition ("UT") where the onboard battery is too cold to supply discharge power or be charged, or the like. When a power supply reaches those predetermined operating conditions, it is desirable to return all functionality of the power supply as quickly as possible. The speed at which the unit can resume functionality may depend on a user's access to a power source. Additionally, the speed at which the unit can be recharged and/or resume functionality may depend on the onboard battery's temperature. Certain battery chemistries and user life cycle requirements require that the battery be at or below a temperature threshold in order to charge or discharge. The charge overtemperature and/or under-temperature thresholds may be lower than the discharge overtemperature and/or under-temperature thresholds. Additionally, battery chemistry and life cycle requirements of the onboard battery may have tier(s) of charge capability that dictate reduced maximum charge rates depending on cell and ambient temperatures.

Various embodiments of the disclosure recognize that challenges exist in enabling the functionality of portable battery units in cold ambient temperatures. These challenges result in an inability to charge and/or discharge function in cold ambient temperature conditions. Therefore, a need exists for a portable battery power supply that is capable of heating up an onboard battery quickly to begin discharging or charging and reach maximum charge rates as soon as possible when the onboard battery is too cold to charge (e.g., minimum cell temperature is below charge UT threshold) and connected to a secondary power source. Some embodiments of the disclosure enable charge/discharge functionality and minimize charge time and/or wait time in cold ambient conditions by utilizing a secondary power source to power a thermal management system independent of the state of charge of a portable battery power supply.

Portable power supplies described herein include an internal power source configured to provide power to a device connected to the portable power supply, a thermal management system configured to control a temperature of the internal power source, a power input unit configured to charge the internal power source, a power output unit configured to provide power output by the internal power source, a first sensing circuit configured to detect the temperature of the internal power source, a secondary power source, and a controller. The controller includes a processor and a memory. The controller is configured to receive a first signal from the first sensing circuit related to the temperature of the internal power source, enable the thermal management system based on the temperature of the internal power source, and enable charging of the internal power source based on the temperature of the internal power source.

In some aspects, the portable power supply is operable to enable charging of the internal power source based on the temperature of the internal power source and a temperature threshold.

In some aspects, the portable power supply is operable to power the thermal management system using the secondary power source.

In some aspects, the portable power supply includes a second sensing circuit configured to detect a state of charge ("SOC") of the internal power source, and the portable power supply is operable to receive a second signal from the second sensing circuit related to the SOC of the internal power source, and power, in response to determining that the SOC of the internal power source exceeds a SOC threshold, the thermal management system using the internal power source.

In some aspects, the portable power supply is operable to includes a second sensing circuit configured to detect a state of charge ("SOC") of the internal power source, and the portable power supply is operable to receive a second signal from the second sensing circuit related to the SOC of the internal power source, and power, in response to determining that the SOC of the internal power source is less than a SOC threshold, the thermal management system using the secondary power source.

In some aspects, the portable power supply is operable to select a charge rate for the internal power source based on the temperature of the internal power source and one or more temperature thresholds, and each of the one or more temperature thresholds is associated with a different charge rate.

In some aspects, the portable power supply is operable to control operation of the thermal management system using the secondary power source based on the selected charge rate and the temperature of the internal power source.

In some aspects, the secondary power source of the portable power supply is provided by the power input unit from an external power source.

Embodiments described herein provide methods of operating a portable power supply. The methods include receiving, by a controller from a first sensing circuit, a first signal related to a temperature of an internal power source of the portable power supply, enabling, by the controller, a thermal management system of the portable power supply based on the temperature of the internal power source, and enabling, by the controller, charging of the internal power source based on the temperature of the internal power source.

In some aspects, the method further includes enabling, by the controller, charging of the internal power source based on the temperature of the internal power source and a temperature threshold.

In some aspects, the method further includes powering, by the controller, the thermal management system using a secondary power source of the portable power supply.

In some aspects, the method further includes receiving, by the controller from a second sensing circuit, a second signal related to a state of charge ("SOC") of the internal power source, and powering, by the controller in response to determining that the SOC of the internal power source exceeds a SOC threshold, the thermal management system using the internal power source.

In some aspects, the method further includes receiving, by the controller from a second sensing circuit, a second signal related to a state of charge ("SOC") of the internal power source, and powering, by the controller in response to determining that the SOC of the internal power source is less than a SOC threshold, the thermal management system using a secondary power source of the portable power supply.

In some aspects, the method further includes selecting, by the controller, a charge rate for the internal power source based on the temperature of the internal power source and one or more temperature thresholds, wherein each of the one or more temperature thresholds is associated with a different charge rate, and controlling, by the controller, operation of the thermal management system using a secondary power source of the portable power supply based on the selected charge rate and the temperature of the internal power source.

In some aspects, the method further includes a secondary power source of the portable power supply that is provided by the power input unit from an external power source.

Portable power supplies described herein include an internal power source configured to provide power to a device connected to the portable power supply, a thermal management system configured to control a temperature of the internal power source, a power input unit configured to charge the internal power source, a power output unit configured to provide power output by the internal power source, a first sensing circuit configured to detect a state of charge ("SOC") of the internal power source, a second sensing circuit configured to detect the temperature of the internal power source, a secondary power source, and a controller. The controller includes a processor and a memory. The controller is configured to receive a first signal from the first sensing circuit related to the SOC of the internal power source, receive a second signal from the second sensing circuit related to the temperature of the internal power source, disable charging of the internal power source based on one of the SOC of the internal power source and the temperature of the internal power source, and power the thermal management system using the secondary power source.

Portable power supplies described herein include an internal power source configured to provide power to a device connected to the portable power supply, a thermal management system configured to control a temperature of the internal power source, a power input unit configured to charge the internal power source, a power output unit configured to provide power output by the internal power source, a first sensing circuit configured to detect a state of charge ("SOC") of the internal power source, a second sensing circuit configured to detect the temperature of the internal power source, and a controller. The controller includes a processor and a memory. The controller is configured to receive a first signal from the first sensing circuit related to the SOC of the internal power source, receive a second signal from the second sensing circuit related to the temperature of the internal power source, disable charging of the internal power source based on one of the SOC of the internal power source and the temperature of the internal power source, and power the thermal management system using a rebound voltage of the internal power source after the internal power source was disabled for reaching a low voltage discharge threshold.

A portable power supply includes an internal power source, a thermal management system configured to control a temperature of one or more internal components of the portable power supply, a power input unit configured to charge the internal power source, a power output unit configured to provide power output by the internal power source, a first sensing circuit configured to detect the temperature of the one or more internal components, a secondary power source, and a controller. The controller is configured to receive a first signal from the first sensing circuit, enable the thermal management system based on the temperature of the one or more internal components, and enable charging of the internal power source based on the temperature of the one or more internal components.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

Functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not explicitly listed.

Other aspects of the invention will become apparent by consideration of the detailed description and accompanying drawings.

### BRIEF DESCRIPTION OF THE DRAWINGS

FIG. 1 illustrates a perspective view of a portable power supply device.
FIGS. 2-3 illustrate embodiments of an internal power source included in the portable power supply device of FIG. 1
FIG. 4A illustrates a control system for the portable power supply device of FIG. 1.
FIG. 4B is a block circuit diagram for network communications module of the portable power supply of FIG. 1.
FIG. 4C is a communication system for the portable power supply device of FIG. 1 and an external device.
FIG. 5 illustrates a schematic diagram of the portable power supply device of FIG. 1.
FIG. 6A-B illustrates a circumstance where a thermal management system is disabled.
FIG. 6C-D illustrates a circumstance where a thermal management system is enabled.
FIG. 6E illustrates a circumstance where a thermal management system and charging are enabled.
FIG. 7 illustrates a voltage response of batteries during pulse discharge.
FIG. 8 illustrates a voltage response of batteries during continuous discharge.
FIG. 9 illustrates the power supply device of FIG. 1 including a secondary power source.
FIG. 10 is a process for charging the internal power source of the power supply device of FIG. 1.
FIG. 11 is a process for powering additional features of the power supply device of FIG. 1.
FIG. 12 is a process for controlling a temperature management system of the power supply device of FIG. 1.
FIG. 13 is a process for controlling a temperature management system of the power supply device of FIG. 1.
FIGS. 14A-B is a process for controlling a temperature management system of the power supply device of FIG. 1.

### DETAILED DESCRIPTION

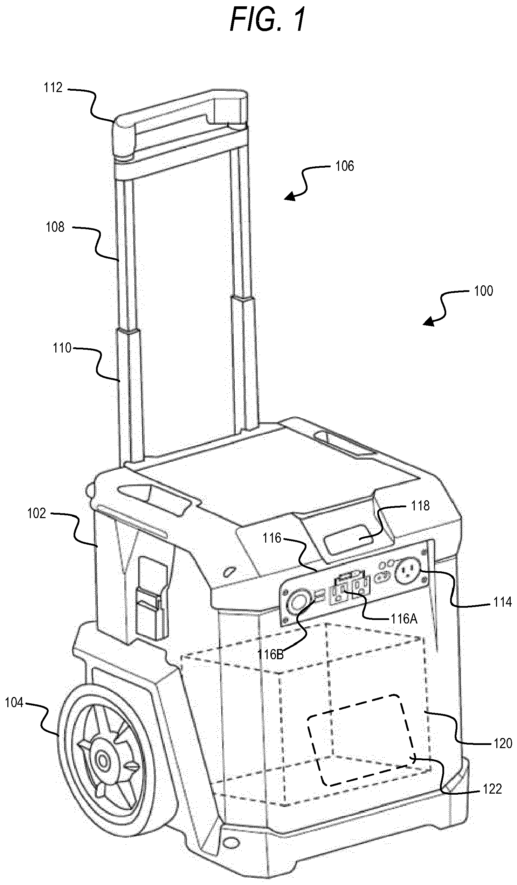

FIG. 1 illustrates a portable power supply device or power supply 100. The power supply 100 includes, among other things, a housing 102. In some embodiments, the housing 102 includes one or more wheels 104 and a handle assembly 106. In the illustrated embodiment, the handle assembly 106 is a telescoping handle movable between an extended position and a collapsed position. The handle assembly 106 includes an inner tube 108 and an outer tube 110. The inner tube 108 fits inside the outer tube 110 and is slidable relative to the outer tube 110. The inner tube 108 is coupled to a horizontal holding member 112. In some embodiments, the handle assembly 106 further includes a locking mechanism to prevent inner tube 108 from moving relative to the outer tube 110 by accident. The locking mechanism may include notches, sliding catch pins, or another suitable locking mechanism to inhibit the inner tube 108 from sliding relative to the outer tube 110 when the handle assembly 106 is in the extended position and/or in the collapsed position. In practice, a user holds the holding member 112 and pulls upward to extend the handle assembly 106. The inner tube 108 slides relative to the outer tube 110 until the handle assembly 106 locks in the extended position. The user may then pull and direct the power supply 100 by the handle assembly 106 to a desired location. The wheels 104 of the power supply 100 facilitate such movement.

The housing 102 of power supply 100 further includes a power input unit 114, a power output unit 116, and a display 118. In the illustrated embodiment, the power input unit 114 includes multiple electrical connection interfaces configured to receive power from an external power source. In some embodiments, the external power source is a DC power source. For example, the DC power source may be one or more photovoltaic cells (e.g., a solar panel), an electric vehicle (EV) charging station, or any other DC power source. In some embodiments, the external power source is an AC power source. For example, the AC power source may be a conventional wall outlet, such as a 120 V outlet or a 240 V outlet, found in North America. As another example, the AC power source may be a conventional wall outlet, such as a 220V outlet or 230V outlet, found outside of North America. In some embodiments, the power input unit 114 is replaced by or additionally includes a cable configured to plug into a conventional wall outlet. In some embodiments, the power input unit 114 further includes one or more devices, such as antennas or induction coils, configured to wirelessly receive power from an external power source. The power received by the power input unit 114 may be used to charge a core battery, or internal power source 120, disposed within the housing 102 of power supply 100. Also, the power received by the power input unit 114 may be used to provide power to a thermal management system 122, disposed within the housing 102 of power supply 100. The thermal management system 122 is configured to reduce a temperature below a high-temperature cut-off threshold of the internal power source 120 resulting in a shorter cooling time duration than a natural cooling duration of the internal power source 120.

The power received by the power input unit 114 may also be used to provide power to one or more devices connected to the power output unit 116. The power output unit 116 includes one more power outlets. In the illustrated embodiment, the power output unit 116 includes a plurality of AC power outlets 116A and DC power outlets 116B. It should be understood that number of power outlets included in the power output unit 116 is not limited to the power outlets illustrated in FIG. 1. For example, in some embodiments of the power supply 100, the power output unit 116 may include more or fewer power outlets than the power outlets included in the illustrated embodiment of power supply 100.

In some embodiments, the power output unit 116 is configured to provide power output by the internal power source 120 to one or more peripheral devices. In some embodiments, the power output unit 116 is configured to provide power provided by an external power source directly to one or more peripheral devices. The one or more peripheral devices may be a smartphone, a tablet computer, a laptop computer, a portable music player, a power tool, a power tool battery pack, a power tool battery pack charger, or the like. The peripheral devices may be configured to receive DC and/or AC power from the power output unit 116.

In some embodiments, the DC power outlets 116B include one or more receptacles for receiving and charging power tool battery packs. In such embodiments, power tool battery packs received by, or connected to, the battery pack receptacles 116B are charged with power output by the internal power source 120 and/or power received directly from the external power source. In some embodiments, power tool battery packs connected to the battery pack receptacles 116B are used to provide power to the internal power source 120, thermal management system 122, and/or one or more peripheral devices connected to outlets of the power output unit 116. In some embodiments, the power output unit 116 includes tool-specific power outlets. For example, the power output unit may include a DC power outlet used for powering a welding tool.

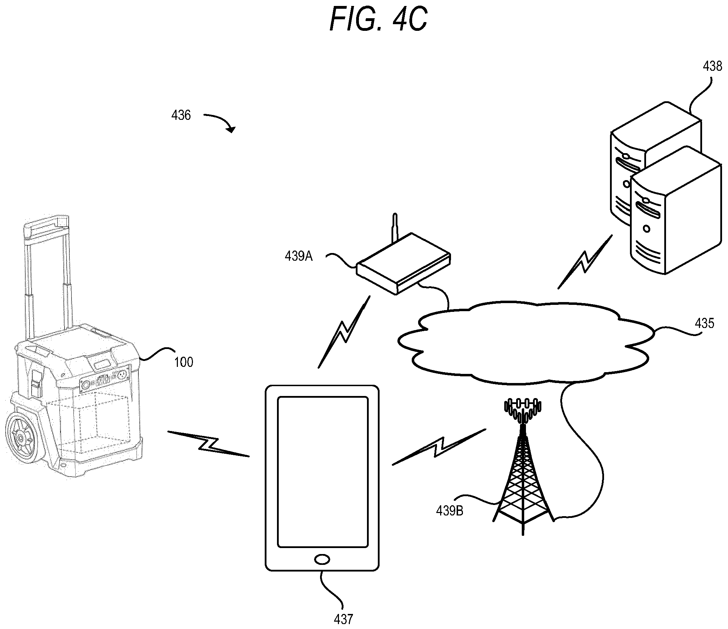

The display 118 is configured to indicate a state of the power supply 100 to a user, such as state of charge of the internal power source 120 and/or fault conditions. In some embodiments the display 118 includes one or more light-emitting diode ("LED") indicators configured to illuminate and display a current state of charge of internal power source 120. In some embodiments, the display 118 is, for example, a liquid crystal display ("LCD"), a light-emitting diode ("LED") display, an organic LED ("OLED") display, an electroluminescent display ("ELD"), a surface-conduction electron-emitter display ("SED"), a field emission display ("FED"), a thin-film transistor ("TFT") LCD, electronic ink display, etc. In other embodiments, the power supply 100 does not include a display. In those embodiments, the display functionality that is achieved by onboard displays may be achieved via an external device 437 (see, e.g., FIG. 4C).

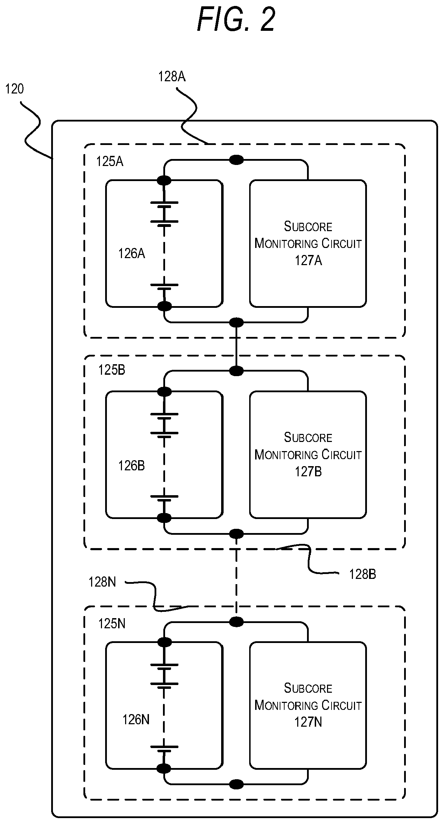

FIG. 2 illustrates a block diagram of the internal power source 120 included in the power supply 100 according to some embodiments. As shown in FIG. 2, the internal power source 120 includes one or more subcore modules 125A-125N. At least one subcore module 125 is included in the internal power source 120. However, internal power source 120 may include any desired number, N, of subcore modules 125A-125N. Although illustrated as being connected in series, the subcore modules 125A-125N may be electrically connected in series, in parallel, and/or a combination thereof. In some embodiments, the subcore modules 125A-125N included in the internal power source 120 are implemented as rechargeable battery packs, such as power tool battery packs. As will be described later in more detail, the rechargeable battery packs included in the internal power source 120 may be relatively high voltage (e.g., 72V) battery packs used for powering large power tools.

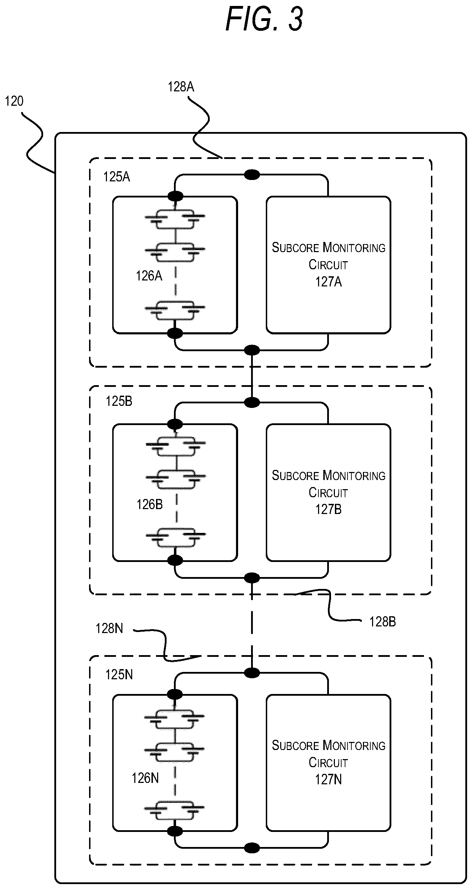

The following description of an individual subcore module 125 is written with respect to subcore module 125A. However, it should be understood that each individual subcore module 125 included in the internal power source 120 can include similar components and include corresponding reference numerals (e.g., 125B, 126B, 127B, 125N, 126N, 127N, etc.). Subcore module 125A includes a stack, or plurality, of battery cells 126A. The stack of battery cells 126A includes at least two battery cells electrically connected in series. However, the stack of battery cells 126A may include as many battery cells as desired. For example, the stack of battery cells 126A may include two, three, four, ten, twenty, twenty-three, twenty-eight, forty-six, seventy or more battery cells electrically connected in series. In some embodiments, the stack of battery cells 126A includes battery cells that are electrically connected in parallel. In some embodiments, the stack of battery cells 126A includes battery cells that are electrically connected in series and in parallel. For example, FIG. 3 illustrates an embodiment of subcore module 125A in which the stack of battery cells 126A are electrically connected in a series-parallel combination. In some embodiments, the subcore module 125A includes multiple stacks of battery cells 126A that are electrically connected in parallel with one another.

The battery cells included in the stack of battery cells 126A are rechargeable battery cells having a lithium ion chemistry, such as lithium phosphate or lithium manganese. In some embodiments, the battery cells included in the stack of battery cells 126A may have lead acid, nickel cadmium, nickel metal hydride, and/or other chemistries. Each battery cell in the stack of battery cells 126A has an individual nominal voltage. The nominal voltage of an individual battery cell included in the stack of battery cells 126A may be, for example, 4.2V, 4V, 3.9V, 3.6V, 2.4V, or some other voltage value. For exemplary purposes, it will be assumed that the nominal voltage of an individual battery cell included in the stack of battery cells 126A is equal to 4V. Accordingly, if the stack of battery cells 126A includes two battery cells connected in series, the nominal voltage of the stack of battery cells 126A, or the subcore module 125A, is equal to 8.0V. Similarly, if the stack of battery cells 126A includes twenty-three battery cells connected in series, the nominal voltage of the subcore module 125A is 92V . As shown in FIG. 3, the amp-hour capacity, or capacity, of subcore module 125A may be increased by adding battery cells connected in a parallel-series combination to the stack of battery cells 126A. In some embodiments, supercapacitors are used in place of or in conjunction with the battery cells.

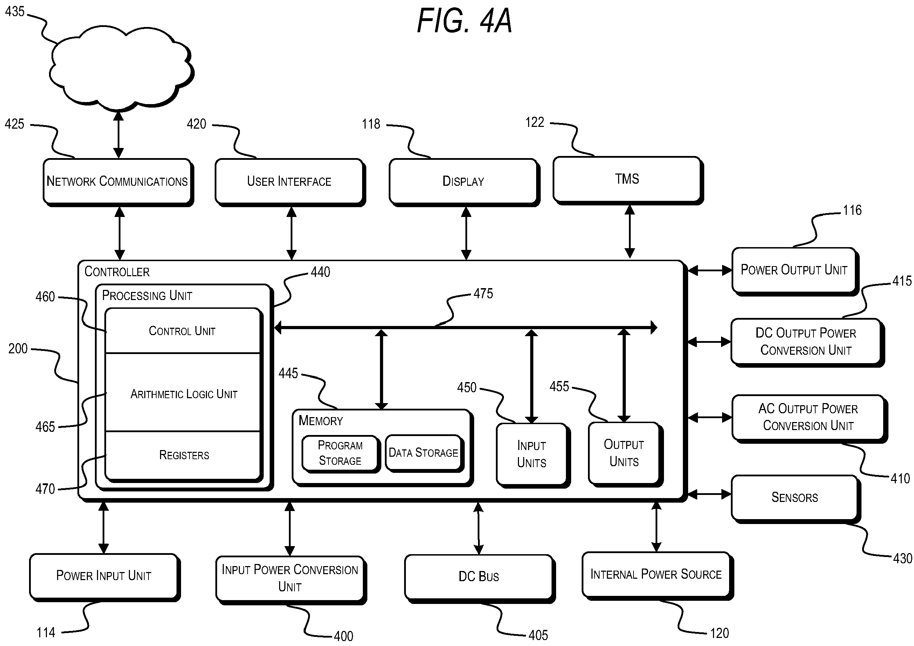

Subcore module 125A further includes a battery, or subcore, monitoring circuit 127A and a subcore housing 128A. The subcore monitoring circuit 127A is electrically connected to the stack of battery cells 126A and a controller 200 (FIG. 4A) included in the power supply 100. The subcore monitoring circuit 127A receives power from the stack of battery cells 126A during operation of the power supply 100. The subcore monitoring circuit 127A is configured to sense the state-of-charge ("SOC") level, or voltage value, of the stack of battery cells 126A and transmit the voltage readings to the controller 200. The voltage level of subcore module 125A may be determined by measuring the total open circuit voltage of the stack of battery cells 126A or by summing the open circuit voltage measurement of each parallel string of battery cells in the stack of battery cells 126A. In some embodiments, the subcore monitoring circuits 127A-127N transmit the voltage readings of the stack of battery cells 126A-126N to a separate master monitoring circuit. The separate master monitoring circuit may send signals to the subcore monitoring circuits 127A-127N to initiate sensing of the state-of-charge ("SOC") level, or voltage value, of the stack of battery cells 126A-126N. In some embodiments, SOC level may be determined using various methodologies, such as, for example, open circuit voltage translation, coulomb counting, highest cell voltage, lowest cell voltage, etc. In some implementations, it may be advantageous to use one of the SOC level determination methods over other methodologies due a state of the power supply 100, various constraints, and utilization of the SOC. Additionally, SOC is used throughout the disclosure and may refer to calculation of a SOC through any of the aforementioned methods. In some embodiments, the subcore monitoring circuit 127A is additionally configured to sense a discharge current of the stack of battery cells 126A (e.g., using a current sensor) and/or a temperature of the subcore module 125A (e.g., using a temperature sensor) and transmit the sensed current and/or temperature readings to the controller 200. The subcore monitoring circuit 127A is further configured to receive commands from the controller 200 during operation of the power supply 100.

In some embodiments, the stack of battery cells 126A and subcore monitoring circuit 127A are disposed within the subcore housing 128A of the subcore module 125A. In some embodiments, the stack of battery cells 126A is disposed within the subcore housing 128A and the subcore monitoring circuit 127A is included as a component of the controller 200. In some embodiments, the subcore module 125A does not include a subcore housing 128A.

As described above, the internal power source 120 of power supply 100 may include multiple subcore modules 125 electrically connected in series and/or parallel. For example, if the internal power source 120 includes a first subcore module 125A and a second subcore module 125B electrically connected in series, where each of the first subcore module 125A and the second subcore module 125B has a nominal voltage of 92V, the combined voltage of the first subcore module 125A and second subcore module 125B equals 184V. Accordingly, the voltage level at which the internal power source 120 outputs DC power is 184V. Likewise, if the internal power source 120 includes five series-connected subcore modules 125A-125E, where each of the subcore modules 125A-125E has a nominal voltage of 56V, the voltage level at which the internal power source 120 outputs DC power is 280V. Any number of subcore modules 125A-125N may be electrically connected in series and/or parallel to achieve a desired nominal voltage and/or capacity for internal power source 120.

FIG. 4A is a generalized schematic illustration of the controller 200 included in power supply 100. The controller 200 is electrically and/or communicatively connected to a variety of modules or components of the power supply 100. For example, the controller 200 may be connected to the power input unit 114, the power output unit 116, the display 118, the internal power source 120, and thermal management system 122. Persons skilled in the art will recognize that electrical and/or communicative connection between the controller 200 and the internal power source 120 includes electrical and/or communicative connection between the controller 200 and components included in the internal power source 120, such as, but not limited to the plurality of subcores 125A-125N and components included therein (e.g., battery cells 126A-16N and subcore monitoring circuits 127A-127B).

The controller 200 is additionally electrically and/or communicatively connected to an input power conversion unit 400, a DC bus 405, an AC output power conversion unit 410, and a DC output power conversion unit 415, a user interface 420, a network communications module 425, and a plurality of sensors 430. The input power conversion unit 400, DC bus 405, AC output power conversion unit 410, and DC output power conversion unit 415 will be described in more detail below.

The network communications module 425 is connected to a network 435 to enable the controller 200 to communicate with peripheral devices in the network, such as a smartphone or a server. The sensors 430 include, for example, one or more voltage sensors, one or more current sensors, one or more temperature sensors, and/or one or more additional sensors used for measuring electrical and/or other characteristics of the power supply 100. Each of the sensors 430 generates one or more output signals that are provided to the controller 200 for processing and evaluation. The user interface 420 is included to provide user control of the power supply 100. The user interface 420 can include any combination of digital and analog input devices required to achieve a desired level of control for the power supply 100. For example, the user interface 420 may include a plurality of knobs, a plurality of dials, a plurality of switches, a plurality of buttons, or the like. In some embodiments, the user interface 420 is integrated with the display 118 (e.g., as a touchscreen display).

The controller 200 includes combinations of hardware and software that are operable to, among other things, control the operation of the power supply 100, communicate over the network 435, receive input from a user via the user interface 420, provide information to a user via the display 118, etc. For example, the controller 200 includes, among other things, a processing unit 440 (e.g., a microprocessor, a microcontroller, an electronic processor, an electronic controller, or another suitable programmable device), a memory 445, input units 450, and output units 455. The processing unit 440 includes, among other things, a control unit 460, an arithmetic logic unit ("ALU") 465, and a plurality of registers 470 (shown as a group of registers in FIG. 4A), and is implemented using a known computer architecture (e.g., a modified Harvard architecture, a von Neumann architecture, etc.). The processing unit 440, the memory 445, the input units 450, and the output units 455, as well as the various modules or circuits connected to the controller 200 are connected by one or more control and/or data buses (e.g., common bus 475). The control and/or data buses are shown generally in FIG. 4A for illustrative purposes. Although the controller 200 is illustrated in FIG. 4A as one controller, the controller 200 could also include multiple controllers configured to work together to achieve a desired level of control for the power supply 100. As such, any control functions and processes described herein with respect to the controller 200 could also be performed by two or more controllers functioning in a distributed manner.

The memory 445 is a non-transitory computer readable medium and includes, for example, a program storage area and a data storage area. The program storage area and the data storage area can include combinations of different types of memory, such as a read only memory ("ROM"), a random access memory ("RAM") (e.g., dynamic RAM ["DRAM"], synchronous DRAM ["SDRAM"], etc.), electrically-erasable programmable ROM ("EEPROM"), flash memory, a hard disk, an SD card, or other suitable magnetic, optical, physical, or electronic memory devices. The processing unit 440 is connected to the memory 445 and is configured to execute software instructions that are capable of being stored in a RAM of the memory 445 (e.g., during execution), a ROM of the memory 445 (e.g., on a generally permanent basis), or another non-transitory computer readable medium such as another memory or a disc. Software included in the implementation of the power supply 100 and controller 200 can be stored in the memory 445 of the controller 200. The software includes, for example, firmware, one or more applications, program data, filters, rules, one or more program modules, and other executable instructions. The controller 200 is configured to retrieve from the memory 445 and execute, among other things, instructions related to the control processes and methods described herein. In other embodiments, the controller 200 includes additional, fewer, or different components.

During operation of the power supply 100, the controller 200 is configured to monitor voltage, current, temperature, and/or other signals received from the various components described above. For example, the controller 200 is configured to monitor voltage signals received from the internal power source 120 when the internal power source 120 is charged by an external power source connected to the power input unit 114. As another example, the controller 200 is configured to monitor voltage signals received from the internal power source 120 when the internal power source 120 provides power to one or more peripheral devices connected to the power output unit 116. More generally, the controller 200 is configured to monitor and/or control power flow to and from the above-described components of power supply 100 that are electrically and communicatively coupled to the controller 200.

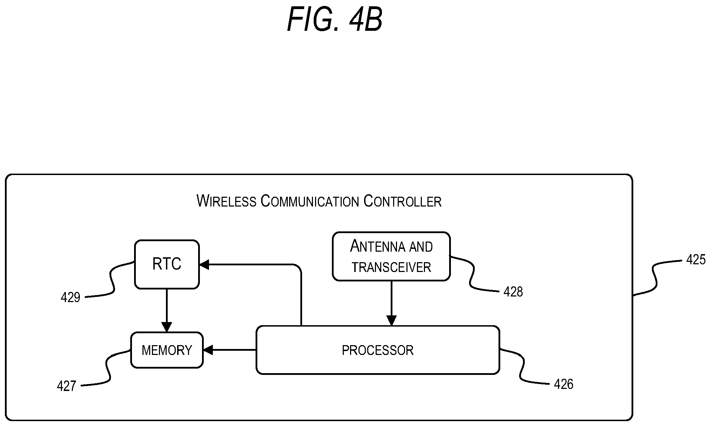

As shown in FIG. 4B, network communications module or wireless communication controller 425 includes a processor 426, a memory 427, an antenna and transceiver 428, and a real-time clock (RTC) 429. The wireless communication controller 425 enables the power supply 100 to communicate with the external device 437 (see, e.g., FIG. 4C). The radio antenna and transceiver 428 operate together to send and receive wireless messages to and from the external device 437 and the processor 426. The memory 427 can store instructions to be implemented by the processor 426 and/or may store data related to communications between the power supply 100 and the external device 437 or the like. The processor 426 for the wireless communication controller 425 controls wireless communications between the power supply 100 and the external device 437. For example, the processor 426 associated with the wireless communication controller 425 buffers incoming and/or outgoing data, communicates with the controller 200, and determines the communication protocol and/or settings to use in wireless communications. The communication via the wireless communication controller 425 can be encrypted to protect the data exchanged between the power supply 100 and the external device 437 from third parties.

In the illustrated embodiment, the wireless communication controller 425 is a Bluetooth^{®} controller. The Bluetooth^{®} controller communicates with the external device 437 employing the Bluetooth ^{®} protocol. Therefore, in the illustrated embodiment, the external device 437 and the power supply 100 are within a communication range (i.e., in proximity) of each other while they exchange data. In other embodiments, the wireless communication controller 425 communicates using other protocols (e.g., Wi-Fi, ZigBee, a proprietary protocol, etc.) over different types of wireless networks. For example, the wireless communication controller 425 may be configured to communicate via Wi-Fi through a wide area network such as the Internet or a local area network, or to communicate through a piconet (e.g., using infrared or NFC communications).

In some embodiments, the network is a cellular network, such as, for example, a Global System for Mobile Communications ("GSM") network, a General Packet Radio Service ("GPRS") network, a Code Division Multiple Access ("CDMA") network, an Evolution-Data Optimized ("EV-DO") network, an Enhanced Data Rates for GSM Evolution ("EDGE") network, a 3GSM network, a 4GSM network, a 4G LTE network, 5G New Radio, a Digital Enhanced Cordless Telecommunications ("DECT") network, a Digital AMPS ("IS-136/TDMA") network, or an Integrated Digital Enhanced Network ("iDEN") network, etc.

The wireless communication controller 425 is configured to receive data from the controller 200 and relay the information to the external device 437 via the antenna and transceiver 428. In a similar manner, the wireless communication controller 425 is configured to receive information (e.g., configuration and programming information) from the external device 437 via the antenna and transceiver 428 and relay the information to the controller 200.

The RTC 429 increments and keeps time independently of the other power supply components. The RTC 429 receives power from the internal power source 120. Having the RTC 429 as an independently powered clock enables time stamping of operational data (stored in memory 427 for later export) and a security feature whereby a lockout time is set by a user (e.g., via the external device 437) and the tool is locked-out when the time of the RTC 429 exceeds the set lockout time.

FIG. 4C illustrates a communication system 436. The communication system 436 includes at least one power supply 100 and an external device 437. Each power supply 100 and the external device 437 can communicate wirelessly while they are within a communication range of each other. Each power supply 100 may communicate power supply status, power supply operation statistics, power supply identification, power supply sensor data, stored power supply usage information, power supply maintenance data, and the like.

Using the external device 437, a user can access the parameters of the power supply 100. With the parameters (e.g., power supply operational data or settings), a user can determine how the power supply 100 has been used, whether maintenance is recommended or has been performed in the past, and identify malfunctioning components or other reasons for certain performance issues. The external device 437 can also transmit data to the power supply 100 for power supply configuration, firmware updates, or to send commands. The external device 437 also allows a user to set operational parameters, safety parameters, operating modes, and the like for the power supply 100.

The external device 437 is, for example, a smart phone (as illustrated), a laptop computer, a tablet computer, a personal digital assistant (PDA), or another electronic device capable of communicating wirelessly with the power supply 100 and providing a user interface. The external device 437 provides the user interface and allows a user to access and interact with the power supply 100. The external device 437 can receive user inputs to determine operational parameters, enable or disable features, and the like. The user interface of the external device 437 provides an easy-to-use interface for the user to control and customize operation of the power supply 100. The external device 437, therefore, grants the user access to the power supply operational data of the power supply 100, and provides a user interface such that the user can interact with the controller 200 of the power supply 100.

In addition, as shown in FIG. 4C, the external device 437 can also share the power supply operational data obtained from the power supply 100 with a remote server 438 connected through a network 435. The remote server 438 may be used to store the tool operational data obtained from the external device 437, provide additional functionality and services to the user, or a combination thereof. In some embodiments, storing the information on the remote server 438 allows a user to access the information from a plurality of different locations. In some embodiments, the remote server 438 collects information from various users regarding their power supplies and provide statistics or statistical measures to the user based on information obtained from the different power supplies. For example, the remote server 438 may provide statistics regarding the experienced efficiency of the power supply 100, typical usage of the power supply 100, and other relevant characteristics and/or measures of the power supply 100. The network 435 may include various networking elements (routers 439A, hubs, switches, cellular towers 439B, wired connections, wireless connections, etc.) for connecting to, for example, the Internet, a cellular data network, a local network, or a combination thereof as previously described. In some embodiments, the power supply 100 is configured to communicate directly with the remote server 438 through an additional wireless interface or with the same wireless interface that the power supply 100 uses to communicate with the external device 437.

In some embodiments, the power supply 100 is configured to provide output power (e.g., from the internal power source 120) until the internal power source 120 reaches a low-voltage cutoff threshold. In embodiments where the power supply 100 received removable and rechargeable battery packs, the battery packs that are used to provide output power from the power supply 100 can be similarly discharged until reaching low-voltage cutoff thresholds. A user can also program the power supply 100 or select an operating mode of the power supply 100 such that the power supply 100 shuts off (e.g., stops outputting power to the power output unit 116) before the power supply 100 or a connected battery pack reaches a low-voltage cutoff threshold. For example, using the external device 437, the user can enable a power down timer of the controller 200. The user is able to enable the power down timer such that, if output power from the power supply 100 is below a threshold (e.g., a power threshold, a current threshold, etc.) for a selected interval of time (e.g., one hour, two hours, six hours, twelve hours, etc.), the output of the power supply 100 is disabled. The user can set the threshold value and the interval of time using the external device 437. As an example, a user can set a power threshold value of 80 Watts and a timer interval of one hour. If the power supply 100 is not outputting 80 Watts of power for one hour, the power supply 100 turns off. In some embodiments, the timer is used as an energy saving feature. Rather than powering relatively low-powered devices for an extended period of time, power is preserved for higher power application (e.g., corded power tools). When the power down timer is not enabled, the power supply 100 will not shut off until a low-voltage cutoff threshold is reached and lower powered devices can be powered until the low-voltage cutoff is reached.

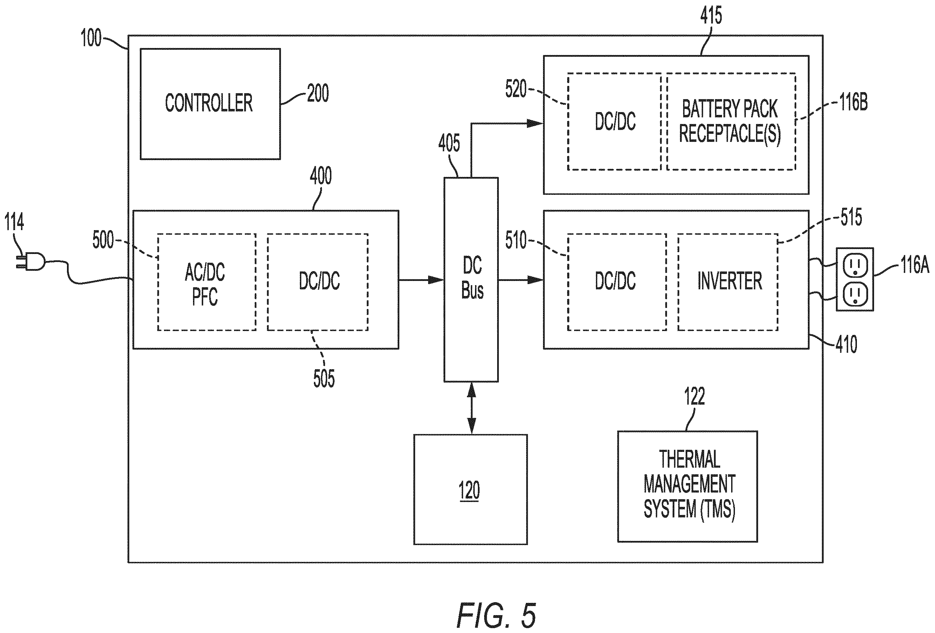

FIG. 5 illustrates a general schematic of the power supply 100 according to some embodiments. As shown in FIG. 5,the power input unit 114 is configured to receive power from an external source and provide the received power to the input power conversion unit 400. Although the power input unit 114 is illustrated as an electrical plug, the power input unit 114 may be implemented as any of the examples described above with respect to the power input unit 114.

The input power conversion unit 400 includes a power factor correction (PFC) circuit 500 and an input DC-DC converter 505. The PFC circuit 500 is configured to convert, or rectify, AC power received from an external source (e.g., a 120V wall outlet) to DC power. The PFC circuit 500 includes components that are configured to smooth, or improve the power factor, of the power rectified by PFC circuit 500. When compared to converter circuits that do not include any PFC components, the PFC circuit 500 operates at an improved efficiency by reducing the amount of current drawn from an external power source during operation of the power supply 100. For example, if power supply 100 demands 3.6 kilowatts (kW) during operation, the PFC circuit 500 would draw less current from the external power source to satisfy the 3.6 kW demand when compared to an amount of current that would be drawn by a converter circuit that does not include any PFC components. In addition, the PFC circuit 500 eases the electromagnetic interference (EMI) requirements of power supply 100 by absorbing the differential mode current that exists within the first input DC-DC converter 505. For example, the PFC circuit 500 may include a capacitor bank, which is connected at the output side of the PFC circuit 500, that supplies most of the differential mode transient current to circuitry downstream of the PFC circuit 500.

As described above, the input power conversion unit 400 further includes an input DC-DC converter 505. The input DC-DC converter 505 is configured to convert DC power output at a first voltage level (e.g., 120V) by the PFC circuit 500 to a voltage level (e.g., 36 V, 72 V, 120V, 280V etc.) used to charge the internal power source 120 and/or power the thermal management system 122. However, it should be understood that in some implementations the internal power source 120 may, alternatively or in addition to, power the thermal management system 122. In some embodiments, the input DC-DC converter 505 is a buck converter configured to decrease the voltage level of DC power output by PFC circuit 500 to a voltage level used to charge the internal power source 120. In some embodiments, the input DC-DC converter 505 is a boost converter configured to increase the voltage level of DC power output by PFC circuit 500 to a voltage level used to charge the internal power source 120. In some embodiments, the input DC-DC converter 505 is a buck/boost converter. In some embodiments, the input DC-DC converter 505 is a single converter circuit. In some embodiments, the input DC-DC converter 505 is implemented as more than one converter circuit.

The DC bus 405 is configured to transfer DC power between components included in power supply 100. For example, the DC bus 405 delivers DC power output by the input power conversion unit 400 to the internal power source 120 for charging of the internal power source 120. As another example, the DC bus 405 delivers DC power output by the internal power source 120 to the AC output power conversion unit 410 and/or the DC output power conversion unit 415. In another example, the DC bus 405 delivers DC power output by the input power conversion unit 400 to the thermal management system 122 for reducing the temperature of the internal power source 120. However, it should be understood that in some implementations the internal power source 120 may, alternatively or in addition to, power the thermal management system 122. In some embodiments, the DC bus 405 transfers DC power from the input power conversion unit 400 directly to the AC output power conversion units 410 and DC output power conversion units 415. The DC bus 405 is implemented as combination of one or more busbars, circuits, wires, and/or terminals used for transferring DC power to and from various components of the power supply 100.

The AC output power conversion unit 410 is configured to convert the DC power provided by internal power source 120 and/or the input power conversion unit 400 to an AC power used for powering one or more peripheral devices connected to the AC outlets 116A. The AC output power conversion unit 410 includes a first DC-DC converter 510 and an inverter 515. The first DC-DC converter 510 is configured to convert DC power from a voltage level used to charge the internal power source 120 (e.g., 36V, 72V, 120V, 280V, etc.) to a voltage level (e.g., 120V, 240V, etc.) that is provided as an input to the inverter 515. In some embodiments, the first DC-DC converter 510 is a boost converter configured to increase the voltage level of DC power provided by the internal power source and/or input power conversion unit 400. In some embodiments, the first DC-DC converter 510 is a buck converter configured to decrease the voltage level of DC power provided by the internal power source 120 and/or the input power conversion unit 400. In some embodiments, the input DC-DC converter 505 is a buck/boost converter. In some embodiments, the input DC-DC converter 505 is a single converter circuit. In some embodiments, the input DC-DC converter 505 is implemented as more than one converter circuit.

With reference to FIG. 5, the DC power output by the first DC-DC converter 510 is provided as the input to inverter 515. The inverter 515 is configured to convert the DC power output by the first DC-DC converter 510 to AC power used for powering one or more peripheral devices connected to the AC outlets 116A. Various circuit configurations that may be used to implement the inverter 515.

The DC output power conversion unit 415 is configured to convert the voltage level of DC power provided by internal power source 120 and/or the input power conversion unit 400 to one or more voltage levels of DC power used for powering one or more peripheral devices connected to the DC outlets 116B. In FIG. 5, the DC outlets 116B are illustrated as receptacles configured to charge power tool battery packs. However, it should be understood that the DC outlets 116B are not limited in implementation to battery pack chargers. For example, the DC outlets 116B may additionally or alternatively include DC power outlets such as USB outlets, headphone jacks (AUX cord port), cigarette lighters, or any other types of DC outputs.

In particular, the DC output power conversion unit 415 includes a second DC-DC converter 520 that is configured to convert DC power from a voltage level used to charge the internal power source 120 (e.g., 36V, 72V, 120V, 280V, etc.) to a voltage level (e.g., 5V, 12V, 18V, 36V, 72V, etc.) used to power the thermal management system 122 or one or more peripheral devices connected to the DC power outlets 116B. For example, if the DC outlets 116B are battery pack receptacles 116B configured to charge power tool battery packs, the second DC-DC converter 520 converts the DC power from a voltage level used to charge the internal power source 120 to one or more voltage levels used to charge one or more power tool battery packs (e.g., 5V, 12V, 18V, 72V, etc.). In some embodiments, the second DC-DC converter 520 is implemented as one or more of the DC-DC converter configurations described herein. In some embodiments, the second DC-DC converter 520 is implemented as one or more converter configurations not explicitly described herein.

In some embodiments, the second DC-DC converter 520 is implemented using a single DC-DC converter. In such embodiments, the second DC-DC converter 520 may be a wide-output converter capable of outputting DC power at a wide range of voltage levels. In some embodiments, the second DC-DC converter 520 is implemented using multiple DC-DC converters, wherein each of the multiple converters outputs DC power at a different voltage level. For example, the second DC-DC converter 520 may include a first converter that outputs DC power at 12V for charging 12V power tool battery packs, a second converter that outputs DC power at 18V for charging 18V power tool battery packs, and a third converter that outputs DC power at 72V for charging 72V battery packs.

In some embodiments, the power supply 100 includes fewer power modules than the illustrated number of power modules. For example, in some embodiments, the AC power output conversion unit 410 and the DC power output conversion unit 415 are contained within a single power module or housing. In some embodiments, the power supply 100 includes more power modules than the illustrated number of power modules.

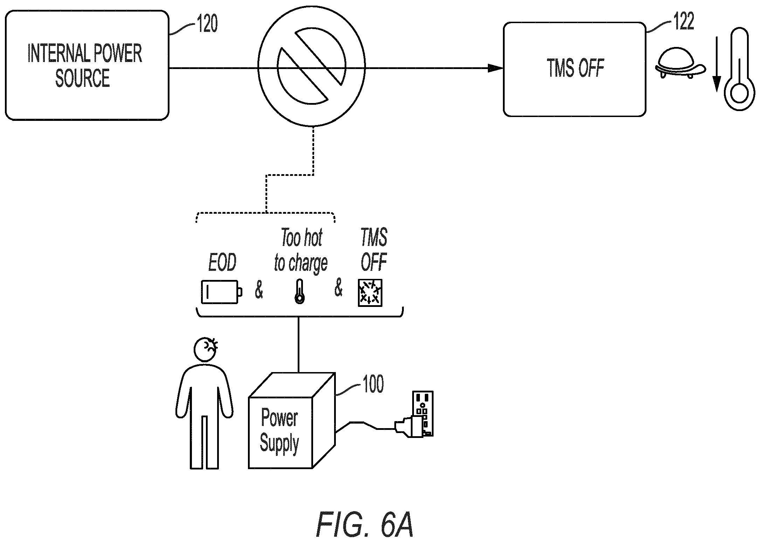

FIG. 6A illustrates a set of operational conditions of the power supply 100 according to some embodiments. As shown in FIG. 6A, the thermal management system 122 is configured to receive power from the internal power source 120 of the power supply 100. The controller 200 may disable discharge and/or charge functions of the internal power source 120 based on a low-voltage cutoff threshold and/or high-temperature cutoff threshold. In this implementation, the SOC of the internal power source 120 reached the low-voltage cutoff threshold and the temperature reached the high-temperature cutoff threshold. In this example, the internal power source 120 is the sole power source of the thermal management system 122. The low-voltage cutoff threshold and/or the high-temperature cutoff threshold of the internal power source 120 limits operation of the thermal management system 122 regardless of the availability of an external power source. As a result, wait times associated with cooling and charging of the internal power source 120 are prolonged.

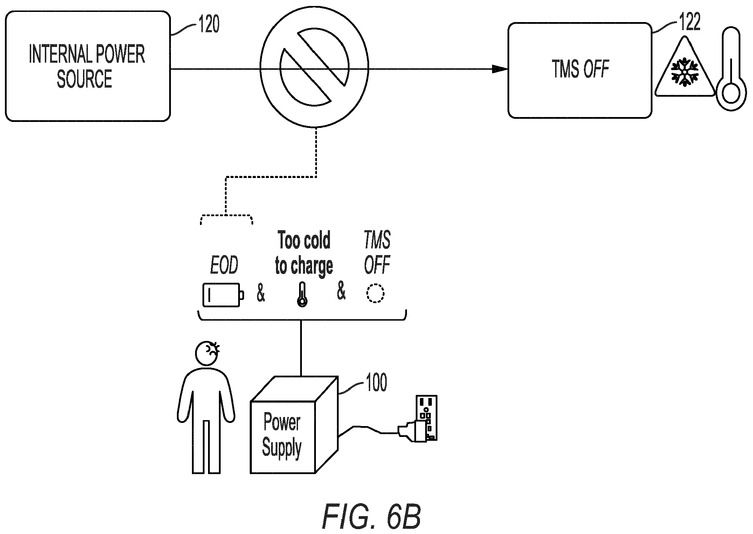

FIG. 6B illustrates a set of operational conditions of the power supply 100 according to some embodiments. As shown in FIG. 6B, the thermal management system 122 is configured to receive power from the internal power source 120 of the power supply 100. The controller 200 may disable discharge and/or charge functions of the internal power source 120 based on a low-voltage cutoff threshold and/or low-temperature cutoff threshold. In this implementation, the SOC of the internal power source 120 reached the low-voltage cutoff threshold and the temperature reached the low-temperature cutoff threshold. In this example, the internal power source 120 is the sole power source of the thermal management system 122. The low-voltage cutoff threshold and/or the low-temperature cutoff threshold of the internal power source 120 limits operation of the thermal management system 122 regardless of the availability of an external power source. As a result, wait times associated with heating and charging of the internal power source 120 are prolonged.

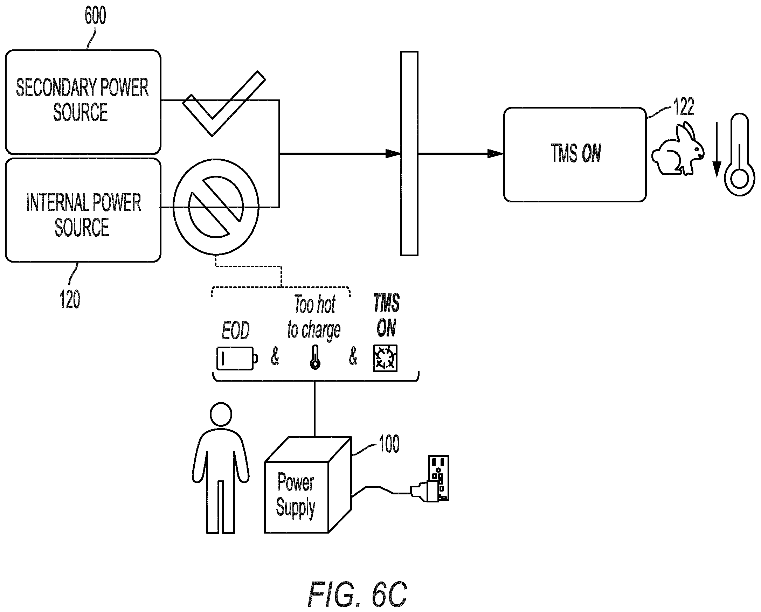

FIG. 6C illustrates a set of operational conditions of the power supply 100 according to some embodiments. As shown in FIG. 6C, the power supply 100 includes the internal power source 120, a secondary power source 600, and the thermal management system 122. The secondary power source 600 may also be used to provide power to one or more devices or features of the power supply 100. In some implementations, the secondary power source 600 is the power input unit 114. For example, the secondary power source 600 is an external power source connected through electrical connection interfaces of the power input unit 114. In some embodiments, the secondary power source 600 is a secondary power source internal to the power supply 100 (e.g., a secondary battery or battery pack, a capacitor bank, a hybrid supercapacitor, etc.). In this example, the thermal management system 122 is configured to receive power from the internal power source 120 of the power supply 100 and/or the secondary power source 600. In one scenario, the internal power source 120 reaches the low-voltage cutoff threshold and/or the high-temperature cutoff threshold. In this scenario, the secondary power source 600 is configured to provide power to the thermal management system 122, which reduces the temperature of the internal power source 120 below the high-temperature cutoff threshold, resulting in a reduced cooling time associated with the internal power source 120 (e.g., as compared to natural cooling of the internal power source 120).

As described above, the power supply 100 may disable all discharge and charge operation depending on the internal power source 120 SOC (e.g., EOD condition and fully charged, respectively) and temperature (e.g., discharge-OT condition and charge-UT condition respectively). When the internal power source 120 is the sole power source for the thermal management system 122, then the thermal management system 122 is also limited by the SOC and temperature of the internal power source 120. In one scenario, the internal power source 120 cannot power the thermal management system 122 to increase the temperature above the low-temperature cutoff threshold (e.g., the charge-UT threshold) when the thermal management system 122 is solely powered by the internal power source 120, which has reached an EOD condition and is below the low-temperature cutoff threshold. As a result, the user will have to move the power supply 100 to a warmer environment or heat by external means to elevate the temperature above the low-temperature cutoff threshold and begin charging the internal power source 120.

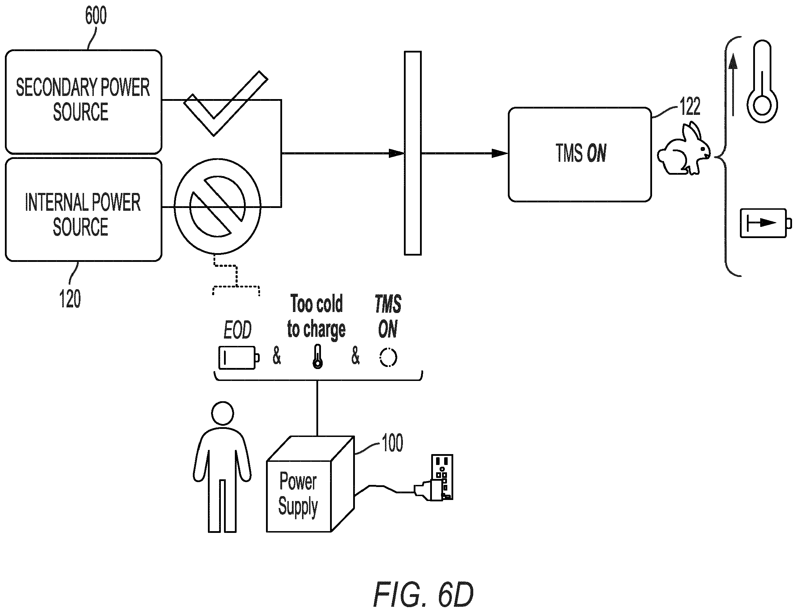

FIG. 6D illustrates a set of operational conditions of the power supply 100 according to some embodiments. As shown in FIG. 6D, the power supply 100 includes the internal power source 120, the secondary power source 600, and the thermal management system 122. The secondary power source 600 may also be used to provide power to one or more devices or features of the power supply 100. In some implementations, the secondary power source 600 is the power input unit 114. For example, the secondary power source 600 is an external power source connected through electrical connection interfaces of the power input unit 114. In some embodiments, the secondary power source 600 is a secondary power source internal to the power supply 100 (e.g., a secondary battery or battery pack, a capacitor bank, a hybrid supercapacitor, etc.). In this example, the thermal management system 122 is configured to receive power from the internal power source 120 of the power supply 100 and/or the secondary power source 600. In one scenario, the internal power source 120 reaches the low-voltage cutoff threshold and/or the low-temperature cutoff threshold. In this scenario, the secondary power source 600 is configured to provide power to the thermal management system 122, which increases the temperature of the internal power source 120 above the low-temperature cutoff threshold, resulting in a reduced heating time associated with the internal power source 120 (e.g., as compared to natural warming of the internal power source 120 due to moving the internal power source 120 to an area with a warmer temperature).

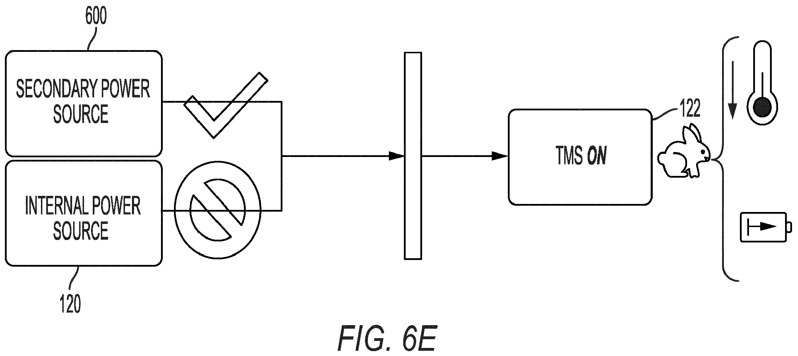

FIG. 6E illustrates a set of operational conditions of the power supply 100 according to some embodiments. As shown in FIG. 6E, the thermal management system 122 is configured to receive power from the internal power source 120 or the secondary power source 600 of the power supply 100. As described above, the secondary power source 600 may also be used to provide power to one or more devices or features of the power supply 100. In some implementations, the secondary power source 600 is the power output unit 116. For example, the secondary power source 600 is one or more peripheral devices connected to outlets of the power output unit 116. In some embodiments, the secondary power source 600 is a secondary power source internal to the power supply 100 (e.g., a secondary battery or battery pack, a capacitor bank, a hybrid supercapacitor, etc.). In this example, the thermal management system 122 is configured to receive power from the internal power source 120 of the power supply 100 and/or the secondary power source 600. In another scenario, neither the low-voltage cutoff threshold, the low-temperature cutoff threshold, nor the high-temperature cutoff threshold of the internal power source 120 is reached. In such a scenario, using the secondary power source 600 to power the thermal management system 122 is still advantageous to enable faster charging time due to charging power being provided to the internal power source 120 (i.e., charging power of the internal power source 120 is not utilized to power the thermal management system 122). Once the temperature of the internal power source 120 has fallen to or below the high-temperature cutoff threshold or risen above the low-temperature cutoff threshold, the internal power source 120 can be charged (e.g., using the secondary power source 600) or discharged (e.g., to resume work).

In some embodiments, it is advantageous to run the thermal management system 122 using the secondary power source 600 once the internal power source 120 exceeds the low-temperature cutoff threshold by making the heating duration and capability of the thermal management system 122 independent of the SOC, voltage, and capacity of the internal power source 120. In some embodiments, the thermal management system 122 may include a heating and cooling mode, which may be continually run even once above the low-temperature cutoff threshold as it is desirable to maintain the internal power source 120 at the optimum temperature that enables a maximum charge current.

In some embodiments, the controller 200 may optimize heating operation of the internal power source 120. For example, in cold ambient temperature scenarios, the controller 200 may utilize the heating mode of the thermal management system 122 in a blended approach to maximize the efficiency of the internal power source 120. While powering the thermal management system 122 in the heating mode via the internal power source 120 has the disadvantage of being dependent on SOC of the internal power source 120, it has the benefit of having higher overall heating efficiency. For example, the resistive heating of the cells of the internal power source 120 from powering the thermal management system 122 also contributes to the heating. In this example, the internal power source 120 initially powers the thermal management system 122 for heating when the SOC is above the low-voltage cutoff threshold and is below the low-temperature cutoff threshold, which enables the highest heating efficiency at the beginning of the heating cycle. Once the SOC depletes to the low-voltage cutoff threshold (e.g., EOD) or the internal power source 120 exceeds the low-temperature cutoff threshold and charging of the internal power source 120 begins, the controller 200 may utilize the secondary power source 600 to continue charging and finish the heating the internal power source 120, which enables the benefits of both approaches to compensate for disadvantages of both approaches. In those embodiments, the internal power source 120 may optimize the charging operation by selectively powering the thermal management system 122 and charging the internal power source 120 using the secondary power source 600. In some embodiments, the maximum capabilities of the secondary power source 600 may be limited when powering the thermal management system 122 and charging the internal power source 120. For example, the power supply 100 includes an onboard charger that includes a low-voltage power supply (LVPS) for powering the thermal management system 122 and separate circuitry for charging the internal power source 120. In this example, powering the LVPS would detract power from the charge circuitry for the internal power source since the input utility power from the secondary power source 600 to the charger is fixed.

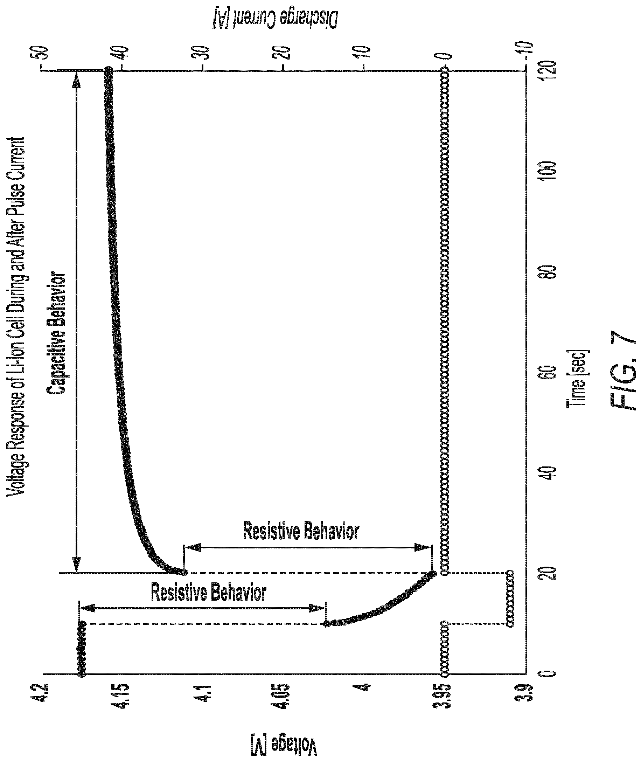

In some embodiments, the secondary power source 600 can also be the internal power source 120 (e.g., in addition to a separate secondary power source 600). For example, FIG. 7 illustrates a graph of capacitive and resistive behavior of Lithium-ion (Li-ion) battery cells included in the internal power source 120. As shown in FIG. 7, a Li-ion battery cell exhibits resistive behavior, exhibited as a sudden drop and sudden rise of voltage during pulse current discharge. Also, after removal of load, the Li-ion battery cell exhibits capacitive behavior as a gradual rise to a steady no-load value after removal of load. The difference between an open-circuit voltage and the under-load voltage (e.g., the overpotential of the Li-ion battery cells) is based on ohmic losses in the Li-ion battery cells, charge transfer overpotentials at an interface, and mass transfer limitations. For example, when the Li-ion battery cells supplies current, the operating or under-load voltage is displaced from the open-circuit voltage because of electrochemical polarization. In this example, when the load is removed from the Li-ion battery cells, the voltage recovers (e.g., rebounds or relaxes) back to a resting open-circuit voltage at the Li-ion battery cells' present state of charge (SOC). The voltage recovery can occur after the internal power source 120 has reached its end of discharge voltage threshold. During this recovery, the battery's ions are diffusing back to equilibrium. The diffusion process of the battery's ions occurs over time (e.g., the gradual capacitive-like recovery of the battery's voltage). As a result, even after the internal power source 120 has reached its end of discharge voltage threshold, there may still be usable energy remaining in the internal power source (e.g., for powering the thermal management system 122). Hereinafter, these phenomena will simply be referred to as resistive and/or capacitive behavior for simplicity of understanding and verbiage.

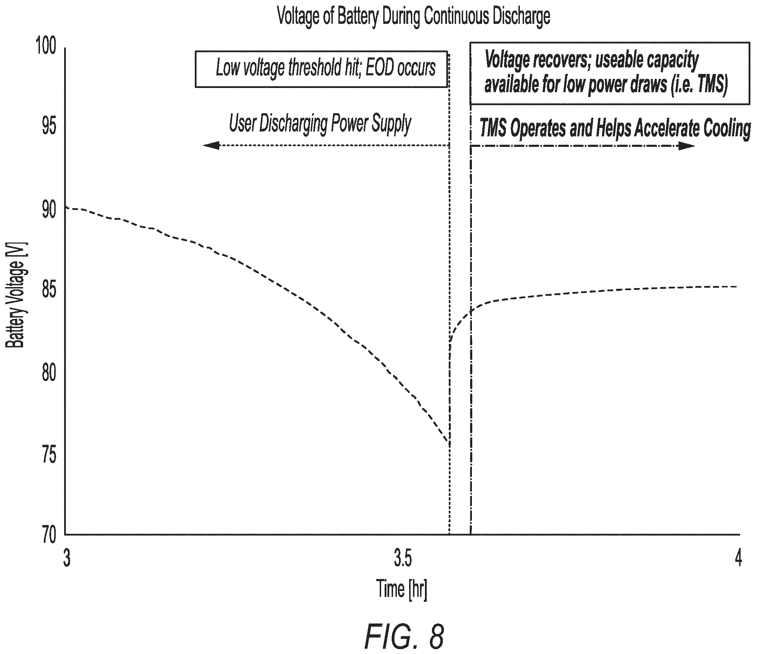

FIG. 8 illustrates a graph of voltage behavior Li-ion battery cells included in power internal power source 120 during continuous discharge. The resistive and capacitive behavior of the Li-ion battery cells is dependent on a plurality of factors, such as battery state-of-charge (SOC). For example, at a low SOC, for example, approximately at the low-voltage cutoff threshold, the resistance of Li-ion battery cells increases significantly. In this example, at a given SOC, a large load displaces the voltage significantly, and a small load displaces the voltage a negligible amount. In one instance, a moderate to large load displaces the voltage significantly from the open-circuit/no-load voltage (OCV) when the Li-ion battery cells are at low SOC. Conversely, a moderate to large load displaces the voltage by a lesser amount when the Li-ion battery cells are at higher SOC. In this instance, the amount this voltage is displaced is a function of the load magnitude applied. When this voltage displacement causes the SOC of the internal power source 120 to reach the end of discharge voltage threshold, the internal power source 120 may be disabled from further discharging. However, there may still be usable energy remaining in the internal power source (e.g., for powering the thermal management system 122 or lower load applications).

In some embodiments, the power supply 100 is configured to power the thermal management system 122 using the secondary power source 600 received from the internal power source 120 of the power supply 100 (e.g., using the energy associated with the rebound voltage of the internal power source 120). In some implementations, the power supply 100 powers the thermal management system 122 in the absence of power access, such as, for example, during a transient travel period to an external power source. Pre-Cooling is the name associated with the feature that takes advantage of the capacitive and resistive behavior of Li-ion battery cells to power the thermal management system 122.

In some embodiments, the internal power source 120 reaches the low-voltage cutoff threshold and, from a user perspective the internal power source 120 is effectively "dead" (i.e., all discharge operations are suspended until the internal power source 120 is charged back to a certain threshold above the low-voltage cutoff threshold). As described above with respect to FIGS. 7-8, the amount of useable energy of the internal power source 120 is based on resistive- and-capacitive voltage recovery. In this scenario, the internal power source 120 can include useable energy depending on operation conditions (e.g., ambient temperature, number of battery discharge cycles, discharge load, etc.) during the prior discharge of the internal power source 120. However, since the battery resistance of the internal power source 120 is high at a low SOC, the useable energy can be used by small or light-loads (e.g., the thermal management system 122). Additionally, the voltage of the internal power source 120 is not significantly displaced upon beginning of the thermal management system 122 operation because the power required to run the thermal management system 122 is significantly less than the standard operational loads of the power supply 100, which enables the internal power source to use the remaining energy (e.g., the recovering voltage) to run the thermal management system 122, even though the unit is effectively "OFF" to the user and while operating within the requirements and thresholds for shelf-life energy requirements. In some instances, a large-to-moderate load would simply re-displace the voltage of the internal power source 120 to the low-voltage cutoff threshold and pose the risk of over-discharging the internal power source 120 or violating shelf-life energy requirements. In those instances, Pre-Cooling firmware of the power supply 100 may be designed to ignore voltage displacement in transient start-up due to the running power draw of the thermal management system 122 being controlled, consistent, and low.

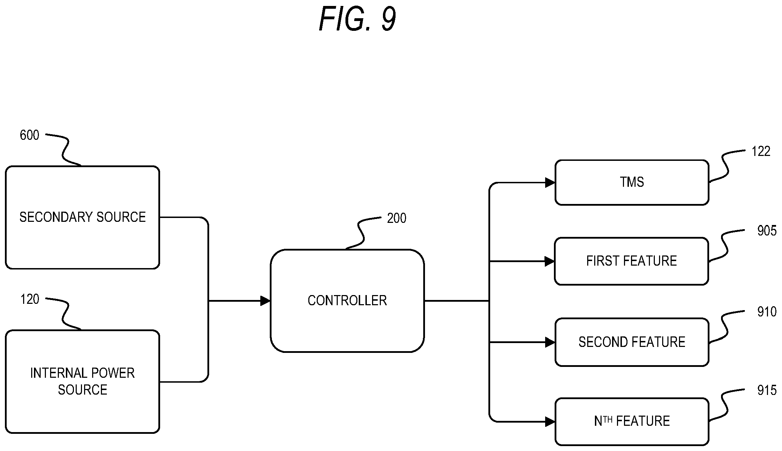

FIG. 9 is a generalized schematic illustration of the power supply 100. The controller 200 is electrically and/or communicatively connected to a variety of modules or components of the power supply 100. For example, the controller 200 may be connected the secondary power source 600, the internal power source 120, thermal management system 122, a first feature 905, a second feature 910, and a N^{th} feature 915. The first feature 905, the second feature 910, and the N^{th} feature 915 may, hereinafter, collectively be referred to as, "the features." As described above, in some embodiments, the controller 200 enables operation of thermal management system 122 or the features using power of the secondary power source 600 and/or the internal power source 120.

In some embodiments, the controller 200 assigns a priority to the features of the power supply 100 using an algorithm. For example, the controller may prioritize features based on function type, voltage required, or combinations thereof. In some embodiments, the controller 200 assigns the highest priority to features associated with cooling the internal power source 120. In this instance, the controller 200 determines the energy available in the secondary power source 600 and enables, for example, the thermal management system 122. If the energy available in the secondary power source 600 is only sufficient to cool the internal power source 120, then the controller 200 will not enable the other features. In other instances, the controller 200 can disable features during operation to ensure the internal power source 120 can be cooled to desired temperature with the available SOC. For example, the controller 200 assigns a priority level of 1, 2, or 3 and disables features with lower assigned priority levels first while operating the thermal management system 122 in pre-cooling mode based on determined available energy. In some embodiments, the features include the thermal management system 122, a light (e.g., a jobsite or accent light), a human machine interface ("HMI") or user input, a personal device charger (e.g., a phone charger), a connection to a personal device (e.g., a phone), a motorized transport capability (e.g., powered drive wheels, etc.), a radio (e.g., AM, FM, Bluetooth, etc.), and the like.

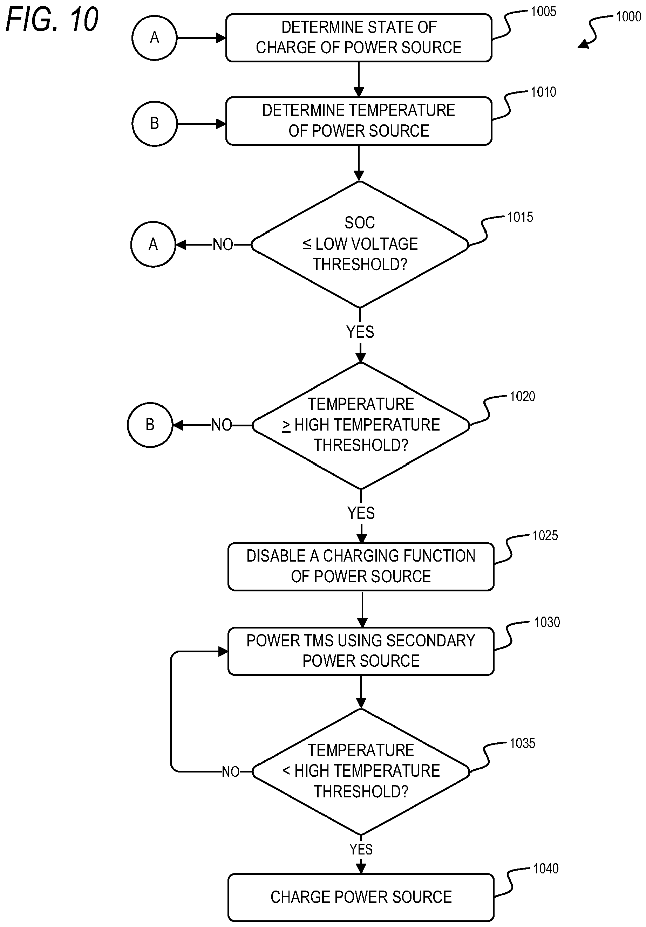

FIG. 10 illustrates a method 1000 executed by the controller 200 of the power supply 100. The controller 200 receives or measures a voltage of the internal power source 120, and the controller 200 determines a SOC of the internal power source 120 (STEP 1005). The controller 200 receives or measures a temperature of the internal power source 120 (STEP 1010). In some embodiments, the controller 200 determines a temperature of one or more components of the power supply 100. The controller 200 compares the SOC of the internal power source 120 to a low voltage threshold (STEP 1015). If, at STEP 1015, the SOC of the internal power source 120 is greater than the low voltage threshold, the controller 200 is configured to continue to determine the SOC of the internal power source 120 (STEP 1005). If, at STEP 1015, the SOC of the internal power source 120 is less than or equal to the low voltage threshold, the controller 200 is configured to determine whether a high-temperature threshold of the internal power source 120 is reached. In some implementations, the controller 200 can also disable one or more features or functions of the power supply 100 based on the SOC of the internal power source 120 and the low voltage threshold.

The controller 200 compares the temperature of the internal power source 120 to the high-temperature threshold (STEP 1020). If, at STEP 1020, the temperature of the internal power source 120 is less than the high-temperature threshold, the controller 200 is configured to continue to determine the temperature of the internal power source 120 (STEP 1010). If, at STEP 1020, the temperature of the internal power source 120 is greater than or equal to the high-temperature threshold, the controller 200 is configured to control one or more functions and/or features of the power supply 100. For example, the controller 200 disables a charging function of the power supply 100 (STEP 1025). In some embodiments, the controller 200 disables one or more other features of the power supply 100. The controller 200 enables the thermal management system 122 using the secondary power source 600 (STEP 1030). In some implementations, operation of the thermal management system 122 may not be directly associated with disabling the charging function. One advantage to operating the thermal management system 122 prior to disabling a charging function of the internal power source 120 allows for reduction of heat during operation as a preventative measure. In some embodiments, the controller 200 may use the power source (e.g., the internal power source 120) to enable the thermal management system 122. In some embodiments, the controller 200 may toggle use of the power source (e.g., the internal power source 120) or the secondary power source 600 to enable the thermal management system 122 to efficiently charge and operate the power source. The controller 200 then proceeds to determine whether the temperature of the internal power source 120 is less than the high-temperature threshold. The controller 200 compares the temperature of the internal power source 120 to the high-temperature threshold (STEP 1035). If, at STEP 1035, the temperature of the internal power source 120 is greater than the high-temperature threshold, the controller 200 is configured to continue powering the thermal management system 122 using the secondary power source 600 (STEP 1030). If, at STEP 1035, the SOC of the internal power source 120 is less than the high-temperature threshold, the controller 200 enables a charging function of the power supply 100 (STEP 1040). The controller 200 is also configured to enable one or more other functions and/or features of the power supply 100.

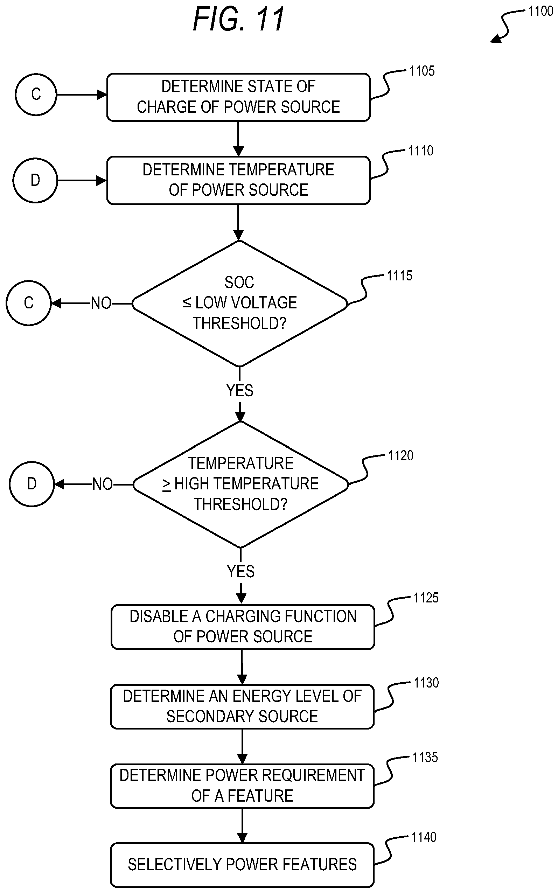

FIG. 11 illustrates a method 1100 executed by the controller 200 of the power supply 100. The controller 200 receives or measures a voltage of the internal power source 120, and the controller 200 determines a SOC of the internal power source 120 (STEP 1105). The controller 200 receives or measures a temperature of the internal power source 120 (STEP 1110). In some embodiments, the controller 200 determines a temperature of one or more components of the power supply 100. The controller 200 compares the SOC of the internal power source 120 to a low voltage threshold (STEP 1115). If, at STEP 1115, the SOC of the internal power source 120 is greater than the low voltage threshold, the controller 200 is configured to continue to determine the SOC of the internal power source 120 (STEP 1105). If, at STEP 1115, the SOC of the internal power source 120 is less than or equal to the low voltage threshold, the controller 200 is configured to determine whether a high-temperature threshold of the internal power source 120 is reached. In some implementations, the controller 200 can also disable one or more other features or functions of the power supply 100 based on the SOC of the internal power source 120 and the low voltage threshold.

The controller 200 compares the temperature of the internal power source 120 to the high-temperature threshold (STEP 1120). If, at STEP 1120, the temperature of the internal power source 120 is less than the high-temperature threshold, the controller 200 is configured to continue to determine the temperature of the internal power source 120 (STEP 1110). If, at STEP 1120, the temperature of the internal power source 120 is greater than or equal to the high-temperature threshold, the controller 200 is configured to control one or more functions and/or features of the power supply 100. For example, the controller 200 disables a charging function of the power supply 100 (STEP 1125). In some embodiments, the controller 200 also disables one or more features of the power supply 100. The controller 200 receives or measures a voltage of the secondary power source 600, and the controller 200 determines an energy level of the secondary power source 600 (STEP 1130). In some embodiments, the controller determines an energy level of the secondary power source 600 using the methodologies discussed above related to the subcore module 125. The controller 200 then determines a power requirement of one or more features of the power supply 100 (STEP 1135). For example, the controller 200 receives a power requirement of the thermal management system 122 from the memory 445. In some embodiments, the controller 200 also determines a power requirement for one or more other features/functions of the power supply 100. The controller 200 selectively enables one or more features of the power supply 100 based on the SOC of secondary power source 600 and the power requirements for one or more other features/functions of the power supply 100 (STEP 1140). In some embodiments, the features/functions of the power supply 100 are selectively enabled with power from the secondary power source 600 based on a determined priority of the features/functions.

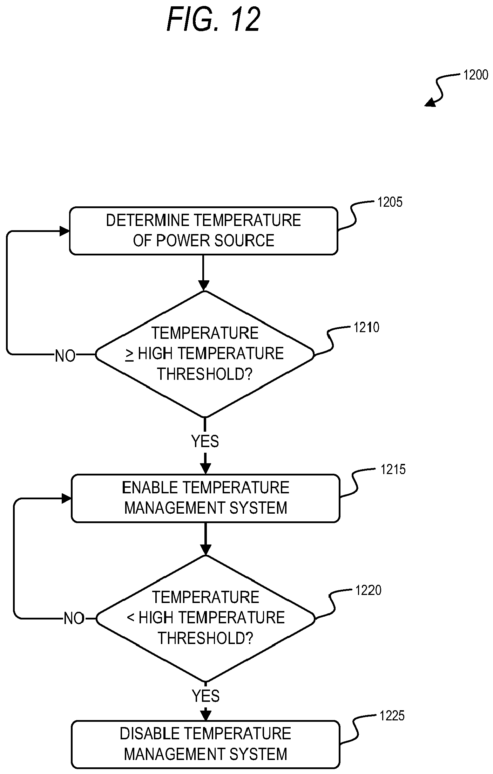

FIG. 12 illustrates a method 1200 executed by the controller 200 of the power supply 100. The controller 200 receives or measures a temperature of the internal power source 120 (STEP 1205). In some embodiments, the controller 200 determines a temperature of one or more components of the power supply 100. The controller 200 compares the temperature of the internal power source 120 to a high-temperature threshold (STEP 1210). If, at STEP 1210, the temperature of the internal power source 120 is less than the high-temperature threshold, the controller 200 is configured to continue to determine the temperature of the internal power source 120 (STEP 1205). If, at STEP 1210, the temperature of the internal power source 120 is greater than or equal to the high-temperature threshold, the controller 200 is configured to control one or more functions and/or features of the power supply 100. For example, the controller 200 powers the thermal management system 122 of power supply 100 to control a Pre-Cooling feature (e.g., using the rebound voltage of the internal power source 120). The controller 200 then enables the thermal management system 122 of the power supply 100 (STEP 1215).

The controller 200 compares the temperature of the internal power source 120 to the high-temperature threshold (STEP 1220). If, at STEP 1220, the temperature of the internal power source 120 is greater than or equal to the high-temperature threshold, the controller 200 is configured to continue to enable the thermal management system of the power supply 100 (STEP 1215). If, at STEP 1220, the temperature of the internal power source 120 is less than the high-temperature threshold, the controller 200 is configured to control one or more functions and/or features of the power supply 100. For example, the controller 200 disables the thermal management system 122 of the power supply 100 (STEP 1225).

In various embodiments, the controller 200 controls the thermal management system 122 to perform "Pre-Cooling" of the power supply 100 that reduces the temperature of the internal power source 120 during a transient travel period to an external power source or in absence of a separate power source (e.g., AC mains power). As a result, once the power supply 100 is connected to an external power source charging of the internal power source 120 resumes in less time, as compared to a natural cooling time, because the power supply 100 has been "precooled." The "Pre-Cooling" functionality is not limited to just cooling of the internal power source 120. In some implementations, the controller 200 can operate the thermal management system 122 via "Pre-Cooling" to reduce the temperature of onboard electronics, chargers, etc.

In some embodiments, the controller 200 may not be able to reduce the temperature of the internal power source 120 below the high-temperature threshold due to various conditions, such as, for example, the residual energy available via voltage recovery not being sufficient to operate the thermal management system 122 for the required period of time. In such a situation, the residual available energy is sufficient to operate thermal management system 122, but ambient conditions are not conducive to fast cooling (e.g., extreme hot sun exposure in the summer). In those embodiments, the controller 200 may utilize an external secondary source in addition to the internal secondary source to reduce the temperature of the internal power source 120 below the high-temperature threshold.

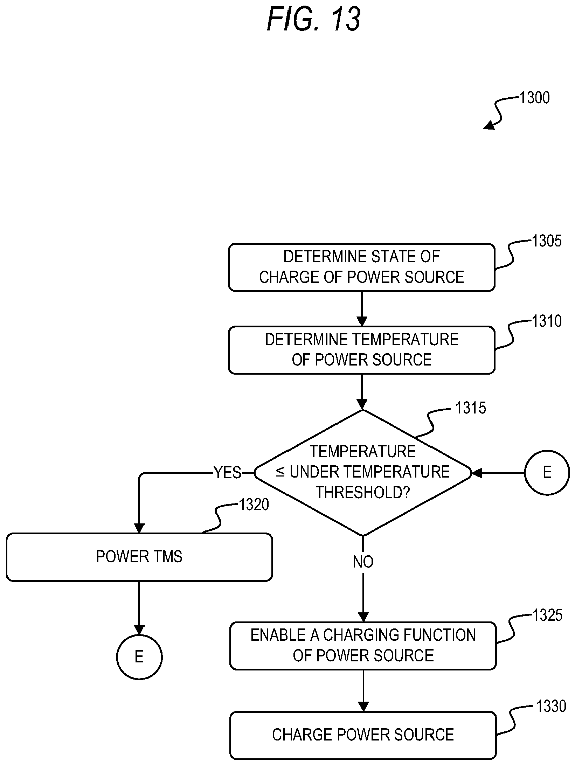

FIG. 13 illustrates a method 1300 executed by the controller 200 of the power supply 100. The controller 200 receives or measures a voltage of the internal power source 120, and the controller 200 determines a SOC of the internal power source 120 (STEP 1305). The controller 200 receives or measures a temperature of the internal power source 120 and/or other internal components of the power supply 100 (STEP 1310). In some embodiments, the controller 200 determines a temperature of one or more components of the power supply 100. The controller 200 compares the temperature of the internal power source 120 to the under-temperature threshold (STEP 1315). If, at STEP 1315, the temperature of the internal power source 120 is less than or equal to the under-temperature threshold (e.g., low-temperature cutoff threshold), the controller 200 is configured control one or more functions and/or features of the power supply 100. For example, the controller 200 powers the thermal management system 122 of the power supply 100 (STEP 1320). In some embodiments, the controller 200 powers the thermal management system 122 with the secondary power source 600. For example, the controller 200 enables a heating mode of the thermal management system to increase the temperature of one or more components of the power supply 100. In addition, the controller 200 may continue to compare the temperature to the under-temperature threshold to determine whether operational conditions of the power supply 100 are met to enable a charging function. In some embodiments, the controller 200 may also enable one or more features of the power supply 100 that generate heat.

If, at STEP 1315, the temperature of the internal power source 120 is greater than the under-temperature threshold, the controller 200 is configured to control one or more functions and/or features of the power supply 100. For example, the controller 200 enables a charging function of the power supply 100 (STEP 1325). In some embodiments, the controller 200 may also enable one or more features of the power supply 100. The controller 200, while the internal power source 120 is charging, continues to receive or measure the voltage of the internal power source 120 until a SOC of the internal power source 120 reaches a SOC threshold (STEP 1330).

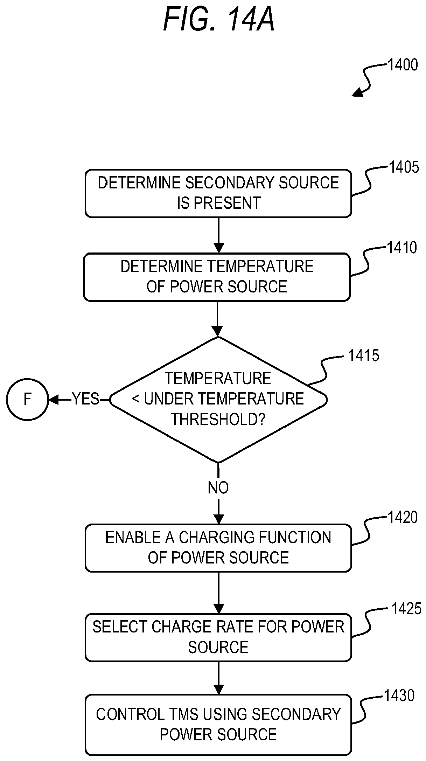

FIG. 14A illustrates a method 1400 executed by the controller 200 of the power supply 100. The controller 200 determines that a secondary power source is present (STEP 1405). The controller 200 receives or measures a temperature of the internal power source 120 (STEP 1410). In some embodiments, the controller 200 determines a temperature of one or more components of the power supply 100. The controller 200 compares the temperature of the internal power source 120 to the under-temperature threshold (STEP 1415). If, at STEP 1415, the temperature of the internal power source 120 is greater than the under-temperature threshold (e.g., low-temperature cutoff threshold), the controller 200 is configured control one or more functions and/or features of the power supply 100. For example, the controller 200 enables a charging function of the power supply 100 (STEP 1420). In some embodiments, the controller 200 may also enable one or more features of the power supply 100.

The controller 200 then selects a charge rate for the internal power source 120 of the power supply 100 (STEP 1425). In some embodiments, the controller selects a charge rate for the internal power source 120 based on the temperature of the power supply 100. For example, the controller 200 may select a charge rate for the power supply 100 from a set of charge rates (e.g., a first rate, a second rate, and a third rate). Each charge rate of the set of charge rates is different and is associated with a tier (e.g., tier 1, tier 2, and tier 3). Each tier may be defined by a minimum temperature threshold. In this example, the controller 200 may compare the temperature of the internal power source 120 to the minimum temperature thresholds of each tier. In one scenario, the controller 200 determines that the temperature of the internal power source 120 is less than the minimum temperature threshold of tier 1, and selects the first rate, which is associated with tier 1. In another scenario, the controller 200 determines that the temperature of the internal power source 120 is greater than or equal to the minimum temperature threshold of tier 1 but less than the minimum temperature threshold of tier 2, and selects the second rate, which is associated with tier 2. In yet another scenario, the controller 200 determines that the temperature of the internal power source 120 is greater than or equal to the minimum temperature threshold of tier 2, and selects the third rate, which is associated with tier 3.

The controller 200 then controls operation of the thermal management system 122 of the power supply 100 (STEP 1430). For example, the controller 200 may power the thermal management system 122 using the secondary power source 600. In this example, the controller 200 controls a heating and cooling mode of the thermal management system 122 to increase or decrease the temperature of one or more components of the power supply 100. The controller 200 may enable one or more modes of the thermal management system 122 using a closed loop control to maintain a maximum charge rate (e.g., the third rate).

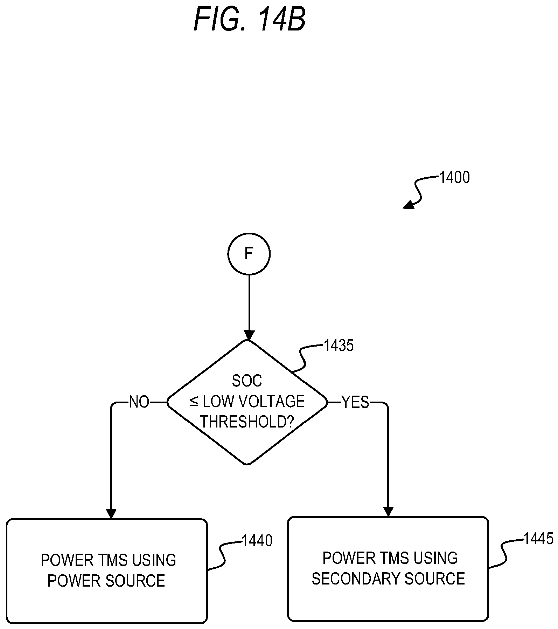

FIG. 14B illustrates a continuation of the method 1400 executed by the controller 200 of the power supply 100. After comparing the temperature of the internal power source 120 to the under-temperature threshold at STEP 1415, if the temperature of the internal power source 120 is less than the under-temperature threshold (e.g., low-temperature cutoff threshold), the controller 200 is configured control one or more functions and/or features of the power supply 100. In some embodiments, the controller 200 receives or measures a voltage of the internal power source 120, and the controller 200 determines a SOC of the internal power source 120.

The controller 200 compares the SOC of the internal power source 120 to a low voltage threshold (STEP 1435). If, at STEP 1435, the SOC of the internal power source 120 is greater than the low voltage threshold, the controller 200 is configured to power the thermal management system 122 with the internal power source 120 (STEP 1440). As noted above, powering the thermal management system 122 using the internal power source 120 advantageously increases heating efficiency for the power supply 100. If, at STEP 1435, the SOC of the internal power source 120 is less than or equal to the low voltage threshold, the controller 200 is configured to power the thermal management system 122 with the secondary power source 600 (STEP 1445).

In various embodiments, it is not necessary for the internal power source 120 to reach EOD for the controller 200 to enable the "Pre-Cooling" feature and provide the user with a benefit. The controller 200 can, for example, activate the "Pre-Cooling" feature in the event a user turns off the power supply 100 and the internal power source 120 is above the charge OT threshold. This ensures that the power supply 100 is as ready as feasibly possible for a charge event across a multitude of scenarios. For example, if a user partially discharges the internal power source 120, the internal power source 120 reaches temperatures above the charge OT threshold, and the power supply 100 is turned off, the controller 200 may activate the "Pre-Cooling" feature to accelerate cooling of the power supply 100 to a temperature below the charge OT threshold. In this case, the "Pre-Cooling" feature runtime duration is not limited to the small useable energy present via rebound voltage (i.e., the battery did not reach EOD) because the internal power source 120 has ample residual battery capacity to use.

### REPRESENTATIVE FEATURES

Representative features are set out in the following clauses, which stand alone or may be combined, in any combination, with one or more features disclosed in the text and/or drawings of the specification.
1. A portable power supply comprising:
   an internal power source configured to provide power to a device connected to the portable power supply;
   a thermal management system configured to control a temperature of the internal power source;
   a power input unit configured to charge the internal power source;
   a power output unit configured to provide power output by the internal power source;
   a first sensing circuit configured to detect the temperature of the internal power source;
   a secondary power source; and
   a controller including a processor and a memory, the controller configured to:
      receive a first signal from the first sensing circuit related to the temperature of the internal power source,
      enable the thermal management system based on the temperature of the internal power source, and
      enable charging of the internal power source based on the temperature of the internal power source.
2. The portable power supply of clause 1, wherein the controller is further configured to:
   enable charging of the internal power source based on the temperature of the internal power source and a temperature threshold.
3. The portable power supply of clause 2, wherein the controller is further configured to:
   power the thermal management system using the secondary power source.
4. The portable power supply of any of clauses 1-3, wherein the portable power supply includes a second sensing circuit configured to detect a state of charge ("SOC") of the internal power source, and
   wherein the controller is further configured to:
   receive a second signal from the second sensing circuit related to the SOC of the internal power source,
   power, in response to determining that the SOC of the internal power source exceeds a SOC threshold, the thermal management system using the internal power source.
5. The portable power supply of any of clauses 1-4, wherein the portable power supply includes a second sensing circuit configured to detect a state of charge ("SOC") of the internal power source, and
   wherein the controller is further configured to:
   receive a second signal from the second sensing circuit related to the SOC of the internal power source,
   power, in response to determining that the SOC of the internal power source is less than a SOC threshold, the thermal management system using the secondary power source.
6. The portable power supply of any of clauses 1-5, wherein the controller is further configured to:
   select a charge rate for the internal power source based on the temperature of the internal power source and one or more temperature thresholds, wherein each of the one or more temperature thresholds is associated with a different charge rate.
7. The portable power supply of clause 6, wherein the controller is further configured to:
   control operation of the thermal management system using the secondary power source based on the selected charge rate and temperature of the internal power source.
8. The portable power supply of any of clauses 1-7, wherein the secondary power source of the portable power supply is a renewable energy source.
9. The portable power supply of any of clauses 1-8, wherein the secondary power source of the portable power supply is provided by the power input unit from an external power source.
10. The portable power supply of any of clauses 1-9, wherein the secondary power source of the portable power supply is provided by a peripheral device connected to the power output unit.
11. The portable power supply of any of clauses 1-10, wherein the controller is further configured to:
   determine an energy level of the secondary power source,
   determine a power requirement of a feature of the portable power supply, and
   selectively power the feature using the secondary power source.
12. A portable power supply comprising:
   an internal power source configured to provide power to a device connected to the portable power supply;
   a thermal management system configured to control a temperature of one or more internal components of the portable power supply;
   a power input unit configured to charge an internal power source;
   a power output unit configured to provide power output by the internal power source;
   a first sensing circuit configured to detect the temperature of the internal power source;
   a secondary power source; and
   a controller including a processor and a memory, the controller configured to:
      receive a first signal from the first sensing circuit related to the temperature of the one or more internal components,
      enable the thermal management system based on the temperature of the one or more internal components, and
      enable charging of the internal power source based on the temperature of the one or more internal components.
13. The portable power supply of clause 12, wherein the controller is further configured to:
   enable charging of the internal power source based on the temperature of the internal power source and a temperature threshold.
14. The portable power supply of clause 13, wherein the controller is further configured to:
   power the thermal management system using the secondary power source.
15. The portable power supply of any of clauses 11-14, wherein the portable power supply includes a second sensing circuit configured to detect a state of charge ("SOC") of the internal power source, and
   wherein the controller is further configured to:
   receive a second signal from the second sensing circuit related to the SOC of the internal power source,
   power, in response to determining that the SOC of the internal power source exceeds a SOC threshold, the thermal management system using the internal power source.
16. The portable power supply of any of clauses 11-15, wherein the portable power supply includes a second sensing circuit configured to detect a state of charge ("SOC") of the internal power source, and
   wherein the controller is further configured to:
   receive a second signal from the second sensing circuit related to the SOC of the internal power source,
   power, in response to determining that the SOC of the internal power source is less than a SOC threshold, the thermal management system using the secondary power source.
17. The portable power supply of any of clauses 11-16, wherein the controller is further configured to:
   select a charge rate for the internal power source based on the temperature of the one or more internal components and one or more temperature thresholds, wherein each of the one or more temperature thresholds is associated with a different charge rate.
18. The portable power supply of clause 17, wherein the controller is further configured to:
   control operation of the thermal management system using the secondary power source based on the selected charge rate and temperature of the one or more internal components.
19. The portable power supply of any of clauses 11-18, wherein the secondary power source of the portable power supply is a renewable energy source.
20. The portable power supply of any of clauses 11-19, wherein the secondary power source of the portable power supply is provided by the power input unit from an external power source.
21. The portable power supply of any of clauses 11-20, wherein the secondary power source of the portable power supply is provided by a peripheral device connected to the power output unit.
22. The portable power supply of any of clauses 11-22, wherein the controller is further configured to:
   determine an energy level of the secondary power source,
   determine a power requirement of a feature of the portable power supply, and
   selectively power the feature using the secondary power source.
23. A method of operating a portable power supply, the method comprising:
   receiving, by a controller from a first sensing circuit, a first signal related to a temperature of an internal power source of the portable power supply;
   enabling, by the controller, a thermal management system of the portable power supply based on the temperature of the internal power source; and
   enabling, by the controller, charging of the internal power source based on the temperature of the internal power source.
24. The method of clause 23, further comprising:
   enabling, by the controller, charging of the internal power source based on the temperature of the internal power source and a temperature threshold.
25. The method of clause 24, further comprising:
   powering, by the controller, the thermal management system using a secondary power source of the portable power supply.
26. The method of any of clauses 23-25, further comprising:
   receiving, by the controller from a second sensing circuit, a second signal related to a state of charge ("SOC") of the internal power source; and
   power, by the controller in response to determining that the SOC of the internal power source exceeds a SOC threshold, the thermal management system using the internal power source.
27. The method of any of clauses 23-26, further comprising:
   receiving, by the controller from a second sensing circuit, a second signal related to a state of charge ("SOC") of the internal power source; and
   power, by the controller in response to determining that the SOC of the internal power source is less than a SOC threshold, the thermal management system using a secondary power source of the portable power supply.
28. The method of any of clauses 23-27, further comprising:
   selecting, by the controller, a charge rate for the internal power source based on the temperature of the internal power source and one or more temperature thresholds, wherein each of the one or more temperature thresholds is associated with a different charge rate; and
   controlling, by the controller, operation of the thermal management system using a secondary power source of the portable power supply based on the selected charge rate and the temperature of the internal power source.
29. The method of any of clauses 23-28, wherein a secondary power source of the portable power supply is provided by the power input unit from an external power source.
30. The method of any of clauses 23-29, wherein the secondary power source of the portable power supply is a renewable energy source.
31. The method of any of clauses 23-30, wherein the secondary power source of the portable power supply is provided by a peripheral device connected to the power output unit.
32. The method of any of clauses 23-31, further comprising:
   determining, by the controller, an energy level of the secondary source,
   determining, by the controller, a power requirement of a feature of the portable power supply, and
   selectively powering, by the controller, the feature using the secondary power source.
33. A method of operating a portable power supply, the method comprising:
   receiving, by a controller from a first sensing circuit, a first signal related to a temperature of one or more internal components of the portable power supply;
   enabling, by the controller, a thermal management system of the portable power supply based on the temperature of the one or more internal components; and
   enabling, by the controller, charging of an internal power source of the portable power supply based on the temperature of the one or more internal components.
34. The method of clause 33, further comprising:
   enabling, by the controller, charging of the internal power source based on the temperature of the internal power source and a temperature threshold.
35. The method of clause 34, further comprising:
   powering, by the controller, the thermal management system using a secondary power source of the portable power supply.
36. The method of any of clauses 33-35, further comprising:
   receiving, by the controller from a second sensing circuit, a second signal related to a state of charge ("SOC") of the internal power source; and
   power, by the controller in response to determining that the SOC of the internal power source exceeds a SOC threshold, the thermal management system using the internal power source.
37. The method of any of clauses 33-36, further comprising:
   receiving, by the controller from a second sensing circuit, a second signal related to a state of charge ("SOC") of the internal power source; and
   power, by the controller in response to determining that the SOC of the internal power source is less than a SOC threshold, the thermal management system using a secondary power source of the portable power supply.
38. The method of any of clauses 33-37, further comprising:
   selecting, by the controller, a charge rate for the internal power source based on the temperature of the one or more internal components and one or more temperature thresholds, wherein each of the one or more temperature thresholds is associated with a different charge rate; and
   controlling, by the controller, operation of the thermal management system using a secondary power source of the portable power supply based on the selected charge rate and the temperature of the one or more internal components.
39. The method of any of clauses 33-38, wherein a secondary power source of the portable power supply is provided by the power input unit from an external power source.
40. The method of any of clauses 33-39, wherein the secondary power source of the portable power supply is a renewable energy source.
41. The method of any of clauses 33-40, wherein the secondary power source of the portable power supply is provided by a peripheral device connected to the power output unit.
42. The method of any of clauses 33-41, further comprising:
   determining, by the controller, an energy level of the secondary source,
   determining, by the controller, a power requirement of a feature of the portable power supply, and
   selectively powering, by the controller, the feature using the secondary power source.

Thus, embodiments described herein provide, among other things, a power supply including a secondary power source for powering a thermal management system. Various features and advantages are set forth in the following claims.

## Claims

1. A portable power supply comprising:
an internal power source configured to provide power to a device connected to the portable power supply;
a thermal management system configured to control a temperature of the internal power source;
a power input unit configured to charge the internal power source;
a power output unit configured to provide power output by the internal power source;
a first sensing circuit configured to detect the temperature of the internal power source;
a secondary power source; and
a controller including a processor and a memory, the controller configured to:
receive a first signal from the first sensing circuit related to the temperature of the internal power source,
enable the thermal management system based on the temperature of the internal power source, and
enable charging of the internal power source based on the temperature of the internal power source.

2. The portable power supply of claim 1, wherein the controller is further configured to:
enable charging of the internal power source based on the temperature of the internal power source and a temperature threshold.

3. The portable power supply of claim 2, wherein the controller is further configured to:
power the thermal management system using the secondary power source.

4. The portable power supply of claim 1, wherein the portable power supply includes a second sensing circuit configured to detect a state of charge ("SOC") of the internal power source, and
wherein the controller is further configured to:
receive a second signal from the second sensing circuit related to the SOC of the internal power source,
power, in response to determining that the SOC of the internal power source exceeds a SOC threshold, the thermal management system using the internal power source.

5. The portable power supply of claim 1, wherein the portable power supply includes a second sensing circuit configured to detect a state of charge ("SOC") of the internal power source, and
wherein the controller is further configured to:
receive a second signal from the second sensing circuit related to the SOC of the internal power source,
power, in response to determining that the SOC of the internal power source is less than a SOC threshold, the thermal management system using the secondary power source.

6. The portable power supply of claim 1, wherein the controller is further configured to:
select a charge rate for the internal power source based on the temperature of the internal power source and one or more temperature thresholds, wherein each of the one or more temperature thresholds is associated with a different charge rate.

7. The portable power supply of claim 6, wherein the controller is further configured to:
control operation of the thermal management system using the secondary power source based on the selected charge rate and the temperature of the internal power source.

8. The portable power supply of claim 1, wherein the secondary power source of the portable power supply is provided by the power input unit from an external power source.

9. A method of operating a portable power supply, the method comprising:
receiving, by a controller from a first sensing circuit, a first signal related to a temperature of an internal power source of the portable power supply;
enabling, by the controller, a thermal management system of the portable power supply based on the temperature of the internal power source; and
enabling, by the controller, charging of the internal power source based on the temperature of the internal power source.

10. The method of claim 9, further comprising:
enabling, by the controller, charging of the internal power source based on the temperature of the internal power source and a temperature threshold.

11. The method of claim 10, further comprising:
powering, by the controller, the thermal management system using a secondary power source of the portable power supply.

12. The method of claim 9, further comprising:
receiving, by the controller from a second sensing circuit, a second signal related to a state of charge ("SOC") of the internal power source; and
powering, by the controller in response to determining that the SOC of the internal power source exceeds a SOC threshold, the thermal management system using the internal power source.

13. The method of claim 9, further comprising:
receiving, by the controller from a second sensing circuit, a second signal related to a state of charge ("SOC") of the internal power source; and
powering, by the controller in response to determining that the SOC of the internal power source is less than a SOC threshold, the thermal management system using a secondary power source of the portable power supply.

14. The method of claim 9, further comprising:
selecting, by the controller, a charge rate for the internal power source based on the temperature of the internal power source and one or more temperature thresholds, wherein each of the one or more temperature thresholds is associated with a different charge rate; and
controlling, by the controller, operation of the thermal management system using a secondary power source of the portable power supply based on the selected charge rate and the temperature of the internal power source.

15. The method of claim 9, wherein a secondary power source of the portable power supply is provided by the power input unit from an external power source.
